# EUROPEAN PATENT APPLICATION

(11) **EP 2 846 543 A1**
(43) Date of publication of application: **11.03.2015**
(21) Application number: 13784565.7
(22) Date of filing: 22.04.2013
(51) Int. Cl.: H04N 7/26

(54) **IMAGE ENCODING METHOD, IMAGE DECODING METHOD, IMAGE ENCODING DEVICE, IMAGE DECODING DEVICE, AND IMAGE ENCODING AND DECODING DEVICE**

(30) Priority: 30.04.2012 US 201261640195 P
(71) Applicant: Panasonic Intellectual Property Corporation of America, Torrance, CA 90503 (US)
(72) Inventor: SASAI, Hisao, Osaka 540-6207 (JP); NISHI, Takahiro, Osaka 540-6207 (JP); SHIBAHARA, Youji, Osaka 540-6207 (JP); TANIKAWA, Kyoko, Osaka 540-6207 (JP); SUGIO, Toshiyasu, Osaka 540-6207 (JP); MATSUNOBU, Toru, Osaka 540-6207 (JP); TERADA, Kengo, Osaka 540-6207 (JP)
(74) Representative: Grünecker, Kinkeldey, Stockmair & Schwanhäusser
(86) International application number: PCT/JP2013/002681
(87) International publication number: WO 2013/164903

(57) **Abstract**

An image encoding method includes: partitioning each of a plurality of pictures into a plurality of tiles (S151); generating a tile structure fixed flag (102) indicating whether or not a partition pattern for the plurality of tiles is same among the plurality of pictures (S152); encoding the plurality of tiles to generate a plurality of encoded signals (S153); and generating an encoded bitstream including the plurality of encoded signals and the tile structure fixed flag (S154).

## Description

### [Technical Field]

The present invention relates to an image encoding method and an image decoding method.

### [Background Art]

ITU-T standard referred to as H. 26x or ISO/IEC standard referred to as MPEG-x are known (see Patent Literature (PTL) 1, for example).

In addition, as a new standard, High Efficiency Video Coding (HEVC) has been considered (see PTL 2, for example).

### [Citation List]

### [Non Patent Literature]

[NPL 1] ISO/IEC 14496-10 "MPEG-4 Part 10 Advanced Video Coding"
[NPL 2] Joint Collaborative Team on Video Coding (JCT-VC) of ITU-T SG16 WP3 and ISO/IEC JTC1/SC29/WG11 8th Meeting: San Jose, CA, USA, 1-10 February, 2012, JCTVC-H1003, "High Efficiency Video Coding (HEVC) text specification draft 6",

### [Summary of Invention]

### [Technical Problem]

For such an image encoding method and an image decoding method, there is a demand to reduce an amount of processing by an image decoding apparatus.

The present invention has an object to provide an image encoding method and an image decoding method through which the amount of processing by the image decoding apparatus can be reduced.

### [Solution to Problem]

In order to achieve the above object, an image encoding method according to an aspect of the present invention includes: partitioning each of a plurality of pictures into a plurality of tiles; generating a tile structure fixed flag indicating whether or not a partition pattern for the plurality of tiles is same among the plurality of pictures; encoding the plurality of tiles to generate a plurality of encoded signals; and generating an encoded bitstream including the plurality of encoded signals and the tile structure fixed flag.

It is to be noted that general or specific aspects of the above may be realized by a system, a method, integrated circuitry, a computer program, or a computer-readable recording medium such as a CD-ROM, and an arbitrary combination of a system, a method, integrated circuitry, a computer program, and a recording medium.

### [Advantageous Effects of Invention]

The present invention can provide an image encoding method and an image decoding method through which the amount of processing by the image decoding apparatus can be reduced.

### [Brief Description of Drawings]

[FIG. 1] FIG. 1 is a diagram illustrating an example of scanning order according to Embodiment 1.
[FIG. 2] FIG. 2 is a diagram illustrating an example of scanning order according to Embodiment 1.
[FIG. 3] FIG. 3 is a diagram illustrating an example of partitioning of tiles and slices according to Embodiment 1.
[FIG. 4] FIG. 4 is a diagram illustrating an example of partitioning of tiles and slices according to Embodiment 1.
[FIG. 5] FIG. 5 is a flowchart of image decoding processing according to Embodiment 1.
[FIG. 6] FIG. 6 is a flowchart of image decoding processing according to Embodiment 1.
[FIG. 7] FIG. 7 is a diagram illustrating a syntax example of an encoded bitstream according to Embodiment 1.
[FIG. 8] FIG. 8 is a diagram illustrating a syntax example of an encoded bitstream according to Embodiment 1.
[FIG. 9] FIG. 9 is a diagram illustrating a syntax example of an encoded bitstream according to Embodiment 1.
[FIG. 10] FIG. 10 is a diagram illustrating an example of partitioning of tiles and slices according to Embodiment 1.
[FIG. 11] FIG. 11 is a diagram illustrating an example of partitioning of tiles and slices according to Embodiment 1.
[FIG. 12] FIG. 12 is a block diagram of an image decoding apparatus according to Embodiment 1.
[FIG. 13] FIG. 13 is a block diagram of an image encoding apparatus according to Embodiment 1.
[FIG. 14] FIG. 14 is a flowchart of image encoding processing according to Embodiment 1.
[FIG. 15] FIG. 15 is a flowchart of image decoding processing according to Embodiment 1.
[FIG. 16] FIG. 16 shows a diagram illustrating an overall configuration of a content providing system for implementing content distribution services.
[FIG. 17] FIG. 17 shows a diagram illustrating an overall configuration of a digital broadcasting system.
[FIG. 18] FIG. 18 shows a block diagram illustrating an example of a configuration of a television.
[FIG. 19] FIG. 19 shows a block diagram illustrating an example of a configuration of an information reproducing/recording unit that reads and writes information from and on a recording medium that is an optical disk.
[FIG. 20] FIG. 20 shows an example of a configuration of a recording medium that is an optical disk.
[FIG. 21A] FIG. 21A shows an example of a cellular phone.
[FIG. 21B] FIG. 21B is a block diagram showing an example of a configuration of a cellular phone.
[FIG. 22] FIG. 22 illustrates a structure of multiplexed data.
[FIG. 23] FIG. 23 schematically shows how each stream is multiplexed in multiplexed data.
[FIG. 24] FIG. 24 shows how a video stream is stored in a stream of PES packets in more detail.
[FIG. 25] FIG. 25 shows a structure of TS packets and source packets in the multiplexed data.
[FIG. 26] FIG. 26 shows a data structure of a PMT.
[FIG. 27] FIG. 27 shows an internal structure of multiplexed data information.
[FIG. 28] FIG. 28 shows an internal structure of stream attribute information.
[FIG. 29] FIG. 29 shows steps for identifying video data.
[FIG. 30] FIG. 30 is a block diagram showing an example of a configuration of integrated circuitry for implementing the moving picture encoding method and the moving picture decoding method according to each of embodiments.
[FIG. 31] FIG. 31 shows a configuration for switching between driving frequencies.
[FIG. 32] FIG. 32 shows steps for identifying video data and switching between driving frequencies.
[FIG. 33] FIG. 33 shows an example of a look-up table in which video data standards are associated with driving frequencies.
[FIG. 34A] FIG. 34A is a diagram showing an example of a configuration for sharing a module of a signal processing unit.
[FIG. 34B] FIG. 34B is a diagram showing another example of a configuration for sharing a module of the signal processing unit.

### [Description of Embodiments]

### (Underlying Knowledge Forming Basis of the Present Invention)

The inventors have found that the conventional technique has the following problems.

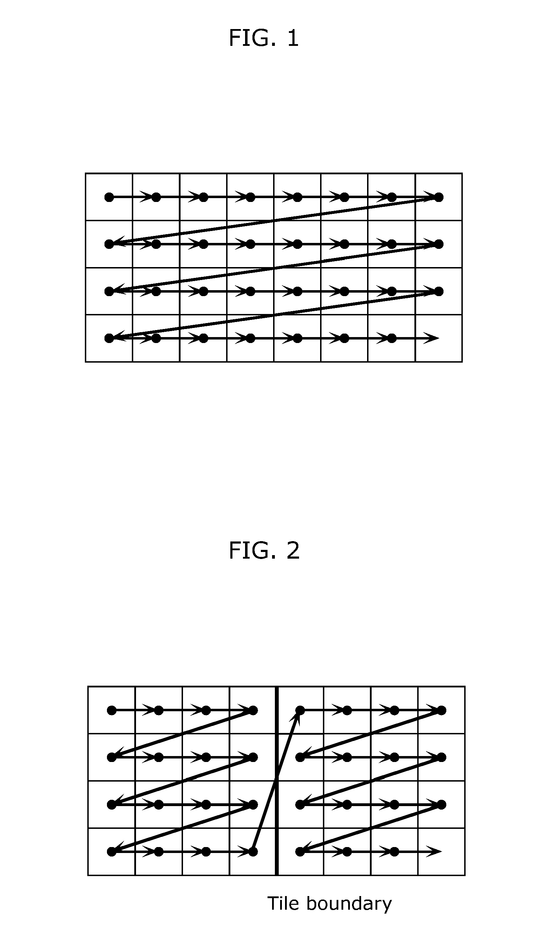

According to ITU-T standard referred to as H.26x or ISO/IEC standard referred to as MPEG-x, image signals for one picture are processed in the raster scan order illustrated in FIG. 1. The image signals for one picture are partitioned into plural units called slices. Each slice includes signals which are continuous in the aforementioned raster scan order. Then, the encoding is performed on a per slice basis.

Furthermore, in HEVC, Tiles has also been examined. In Tiles, image signals for one picture are partitioned into plural rectangular units (tiles). Then, on a per rectangle obtained by the partitioning basis, signals included in the rectangle are processed in the raster scan order (see FIG. 2). Tiles allows partitioning of the screen in the vertical direction, and thus the line memory can be smaller.

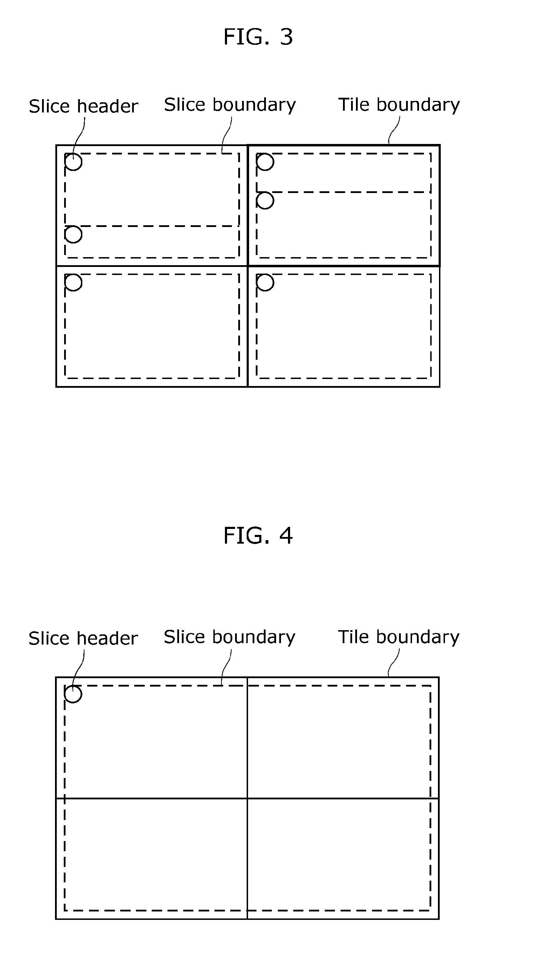

For example, in the example shown in FIG. 3, the parts enclosed with the solid lines represent tiles, and the parts enclosed with the dashed lines represent slices obtained by partitioning the tiles. Although FIG. 3 indicates an example in which a tile boundary does not cross a slice boundary, a tile boundary may be in a slice as in FIG. 4.

However, the inventors have found the following problem in the above technique: when parallel processing is performed on each of the regions obtained by the partitioning into tiles, it is difficult to find the beginning of the tile which is the beginning of the region on which the parallel processing is performed.

To be more specific, preliminary processing is required to determine whether or not the image decoding apparatus is capable of performing parallel processing (parallel decoding) on a current bitstream to be decoded. This preliminary processing causes an increase in the processing time, which makes implementation of high speed processing difficult. In addition, there is a problem that a circuitry size increase is required to implement the preliminary processing at high speed.

In the present embodiment, description is provided on an image decoding apparatus capable of performing parallel decoding processing. With the image decoding apparatus, determination is made on whether or not parallel decoding processing on the current bitstream is possible, and when the parallel decoding processing is possible, determination is made on from which point the parallel decoding processing can be performed independently, at high speed.

Furthermore, in the present embodiment, description is provided on an image encoding method and an image decoding method through which the processing amount by the image decoding apparatus can be reduced.

The image encoding method according to an aspect of the present invention includes: partitioning each of a plurality of pictures into a plurality of tiles; generating a tile structure fixed flag indicating whether or not a partition pattern for the plurality of tiles is same among the plurality of pictures; encoding the plurality of tiles to generate a plurality of encoded signals; and generating an encoded bitstream including the plurality of encoded signals and the tile structure fixed flag.

This does not require the image decoding apparatus to decode information on tiles of each picture when the tile structure fixed flag indicates that the tile structure is the same among the plural pictures. As described above, with the image encoding method, the amount of processing by the image decoding apparatus can be reduced.

For example, the image encoding method may further include generating tile structure information indicating the partition pattern for the plurality of tiles, wherein, in the generating of an encoded bitstream, the encoded bitstream may be generated including the tile structure information.

For example, the tile structure information may indicate the number of rows and the number of columns of the plurality of tiles included in each of the plurality of pictures.

For example, the tile structure information may include a uniform-spacing flag indicating whether or not partition boundaries of the plurality of tiles are uniformly spaced.

For example, the image encoding method may further include generating parallel processing entry point information indicating one of the tiles that is an entry point for parallel decoding processing by an image decoding apparatus, wherein, in the generating of an encoded bitstream, the encoded bitstream may be generated including the parallel processing entry point information.

Thus, the image decoding apparatus is allowed to recognize the entry point for the parallel decoding processing with smaller processing amount, by referring to the parallel processing entry point information. As described above, with the image encoding method, the amount of processing by the image decoding apparatus can be reduced.

For example, the image encoding method may further include generating tile position information indicating positions of the plurality of tiles, wherein, in the generating of an encoded bitstream, the encoded bitstream may be generated including the tile position information, and the parallel processing entry point information may be different from the tile position information.

For example, in the encoded bitstream, the parallel processing entry point information may be located behind the tile position information.

For example, the parallel processing entry point information may include: a flag indicating whether or not a current tile to be processed is an entry point for parallel processing; and an identification number of a parallel processing unit which begins at the current tile.

For example, an image decoding method according to an aspect of the present invention includes: obtaining a tile structure fixed flag included in an encoded bitstream and indicating whether or not a partition pattern for the plurality of tiles is same among the plurality of pictures; identifying a tile structure based on the tile structure fixed flag; and generating a plurality of decoded signals by performing decoding on a plurality of encoded signals included in the encoded bitstream and corresponding to each of the plurality of tiles, according to the identified tile structure.

This does not require the image decoding apparatus to decode information on tiles of each picture when the tile structure fixed flag indicates that the tile structure is the same among the plural pictures. As described above, with the image decoding method, the amount of processing by the image decoding apparatus can be reduced.

For example, the image decoding method may further include obtaining, from the encoded bitstream, tile structure information indicating the partition pattern for the plurality of tiles, wherein, in the identifying of a tile structure, the tile structure may be identified based on the tile structure information.

For example, the tile structure information may indicate the number of rows and the number of columns of the plurality of tiles included in each of the plurality of pictures.

For example, the tile structure information may include a uniform-spacing flag indicating whether or not partition boundaries of the plurality of tiles are uniformly spaced.

For example, the image decoding method may further include obtaining, from the encoded bitstream, parallel processing entry point information indicating one of the plurality of tiles that is an entry point for parallel processing, wherein, in the generating of a plurality of decoded signals, the parallel decoding processing may be performed based on the parallel processing entry point information.

Thus, the image decoding apparatus is allowed to recognize the entry point for the parallel decoding processing with smaller processing amount, by referring to the parallel processing entry point information. As described above, with the image decoding method, the amount of processing by the image decoding apparatus can be reduced.

For example, the image decoding method may further include obtaining, from the encoded bitstream, tile position information indicating positions of the plurality of tiles, wherein, in the generating of a plurality of decoded signals, the plurality of encoded signals may be decoded based on the tile position information, and the parallel processing entry point information may be different from the tile point information.

For example, in the obtaining of parallel processing entry point information, the parallel processing entry point information located behind the tile position information in the encoded bitstream may be obtained.

For example, the parallel processing entry point information may include: a flag indicating whether or not a current tile to be processed is an entry point for parallel processing; and an identification number of a parallel processing unit which begins at the current tile.

Furthermore, an image encoding apparatus according to an aspect of the present invention includes: control circuitry; and storage electrically connected to the control circuitry, wherein the control circuitry executes: partitioning each of a plurality of pictures into a plurality of tiles; generating a tile structure fixed flag indicating whether or not a partition pattern for the plurality of tiles is same among the plurality of pictures; encoding the plurality of tiles to generate a plurality of encoded signals; and generating an encoded bitstream including the plurality of encoded signals and the tile structure fixed flag.

With this configuration, the image decoding apparatus does not have to decode information on tiles of each picture when the tile structure fixed flag indicates that the tile structure is the same among the plural pictures. As described above, with the image encoding apparatus, the amount of processing by the image decoding apparatus can be reduced.

Furthermore, an image decoding apparatus according to an aspect of the present invention includes: control circuitry; and storage electrically connected to the control circuitry; wherein the control circuitry executes: obtaining a tile structure fixed flag included in an encoded bitstream and indicating whether or not a partition pattern for the plurality of tiles is same among a plurality of pictures; identifying a tile structure based on the tile structure fixed flag; and generating a plurality of decoded signals by performing decoding on a plurality of encoded signals included in the encoded bitstream and corresponding to each of a plurality of tiles, according to the identified tile structure.

With this configuration, the image decoding apparatus does not have to decode information on tiles of each picture when the tile structure fixed flag indicates that the tile structure is the same among the plural pictures. As described above, with the image decoding apparatus, the processing amount can be reduced.

Furthermore, an image encoding and decoding apparatus according to an aspect of the present invention includes: the image encoding apparatus; and the image decoding apparatus.

It is to be noted that general or specific aspects of the above may be realized by a system, a method, integrated circuitry, a computer program, or a computer-readable recording medium such as a CD-ROM, and an arbitrary combination of a system, a method, integrated circuitry, a computer program, and a recording medium.

Embodiments according to the present invention are described below with reference to the Drawings.

It is to be noted that each of the embodiments described below is a comprehensive or specific example of the present invention. Numeric values, shapes, materials, constituents, positions and topologies of the constituents, steps, an order of the steps, and the like in the following embodiments are an example of the present invention, and it should therefore not be construed that the present invention is limited by these embodiments. Furthermore, out of the constituents in the following embodiments, the constituents not stated in the independent claims describing the broadest concept of the present invention are described as optional constituents.

### [Embodiment 1]

In the present embodiment, description is provided on parallel decoding processing performed by an image decoding apparatus capable of performing parallel decoding processing. In the present embodiment, a bitstream includes information which allows the image decoding apparatus to perform the parallel processing easily.

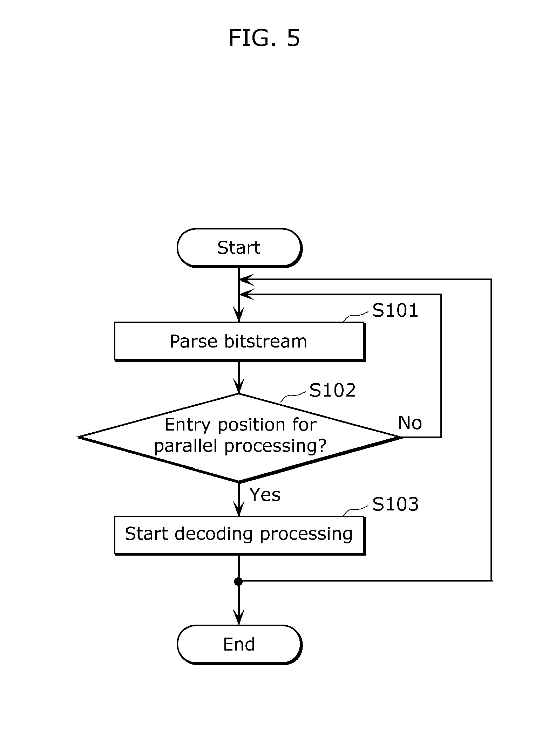

FIG. 5 is a flowchart illustrating an outlook of image decoding processing according to the present embodiment.

First, the image decoding apparatus parses information on processing units (tiles, for example) included in the bitstream (S101). Next, the image decoding apparatus determines, based on the result of the parsing, whether or not a position of the processing unit is a parallel processing entry position (S102). When the position of the processing unit is the parallel processing entry position (Yes in S102), the image decoding apparatus starts the parallel decoding processing (S103). Furthermore, the image decoding apparatus performs processing that follows step S101 on the subsequent processing units. On the other hand, when the position of the processing unit is not the parallel processing entry position (No in S102), the image decoding apparatus performs processing that follows step S101 on the next processing unit included in the bitstream.

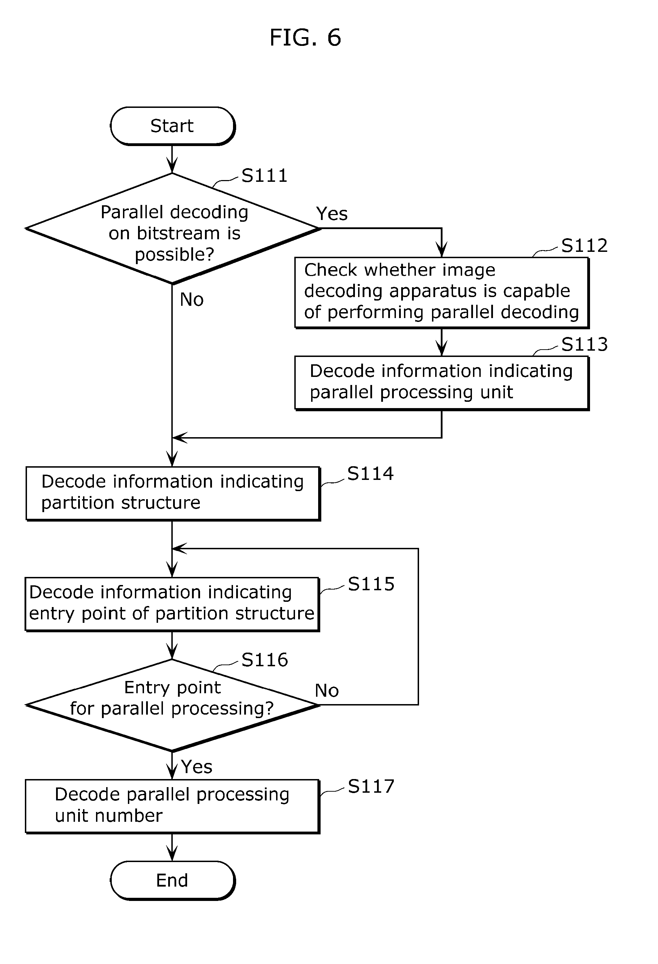

The following describes a detailed flow of the image decoding processing. FIG. 6 is a flowchart illustrating a flow of the image decoding processing according to the present embodiment.

First, the image decoding apparatus determines whether or not the parallel processing on the bitstream is possible (S111). When the parallel processing is possible (Yes in S111), the image decoding apparatus checks whether the image decoding apparatus is capable of executing parallel processing (S112). Specifically, the image decoding apparatus checks whether or not the image decoding apparatus has a function to perform parallel processing. When the image decoding apparatus is capable of performing parallel processing, the image decoding apparatus decodes information indicating a parallel processing unit (S113). When the image decoding apparatus is not capable of performing the parallel processing, the image decoding apparatus performs the same processing as when the parallel processing on the bitstream is not possible. For example, when parallel processing on the bitstream is not possible and when the image decoding apparatus is not capable of performing the parallel processing, the image processing apparatus performs normal decoding processing instead of performing the parallel decoding processing.

Next, the image decoding apparatus decodes information indicating a partition structure (S114). Here, the partition structure is a tile structure, for example. Next, the image decoding apparatus decodes information indicating an entry point of the partition structure and information which is encoded subsequently and indicates an entry point for parallel processing (S115). When a current processing unit to be processed (a tile, for example) is the entry point for parallel processing (Yes in S116), the image decoding apparatus decodes a parallel processing unit (substream) number (S117). On the other hand, when the entry point of the partition structure is not the entry point for parallel processing (No in S116), the image decoding apparatus decodes information indicating the entry point of the next partition structure (S115).

With the above processing, the image decoding apparatus can recognize the entry point which can be dealt with as a parallel processing unit from the structure in which a picture is partitioned into plural units, and thus can start the parallel decoding processing earlier.

It is to be noted that the image decoding apparatus may determine whether or not parallel processing on the bitstream is possible using a flag (a uniform-spacing flag 113 described later) included in the bitstream and indicating whether or not the current picture is partitioned averagely in the partition structure, for example. Specifically, the image decoding apparatus determines that the parallel processing is possible when the current picture is partitioned averagely. Alternatively, the image decoding apparatus may determine whether or not the parallel processing on the bitstream is possible simply using one-bit information included in the bitstream and indicating whether the parallel processing is possible. Alternatively, the image decoding apparatus may refer to information included in the bitstream and indicating the number of regions on which the parallel processing is possible, and determine that the parallel processing on the bitstream is possible when it is indicated that the number is not 0. It is to be noted that the aforementioned schemes may be used according to the balance between the function and the coding amount.

Furthermore, the information indicating the partition structure (tile structure information 110 described later) includes: information indicating the number of partitions in the horizontal direction (the number of columns 111 described later); and information indicating the number of partitions in the vertical direction (the number of rows 112 described later), of the regions obtained by the partitioning, for example. Furthermore, the information indicating the partition structure may further include information indicating the number of processing units (processing units called Coding tree blocks (Ctbs) or Largest Coding Units (LCUs), for example) included in each of the regions obtained by the partitioning (column width 114 and row height 115 described later).

Information indicating the entry point of the partition structure (tile position information) may be a special bit sequence called start code. In this case, the image decoding apparatus can search the entry point included in the bitstream through processing for searching for the start code. Alternatively, the information indicating the entry point of the partition structure may be information indicating the number of bits (bytes) from the current processing unit to the next processing unit. In this case, the image decoding apparatus can recognize the position of beginning of the partition structure by skipping data for the bits (bytes) indicated.

Information indicating parallel processing unit (partition information 104 described later) may include the number of partitions in the horizontal direction and the number of partitions in the vertical direction (the number of columns 105 and the number of rows 106 described later), of the regions obtained by uniform partitioning, for example. Alternatively, the information indicating the parallel processing unit may indicate a depth in a quadtree. Specifically, when the depth is one, the picture is partitioned into four units in a same size. When the depth is two, the picture is partitioned into 16 units in a same size. It is to be noted that the uniform partitioning indicates uniformly partitioning a picture, in which the smallest unit is a processing unit called Ctb or LCU.

Furthermore, information indicating the entry point for the parallel processing (parallel processing entry point information 120 described later) includes a flag indicating whether or not a position of the current processing unit is the entry point for parallel processing (parallel processing entry point flag 121 described later) and an identification number (ID) of each parallel processing unit (substream identifier 122 described later).

It is to be noted that the aforementioned information does not necessarily be located sequentially in the bitstream. The image decoding apparatus can perform the decoding processing correctly as long as the information can be obtained at a timing the image decoding apparatus requires.

It is to be noted that an image decoding apparatus not supporting the parallel processing may decode the information indicating parallel processing unit.

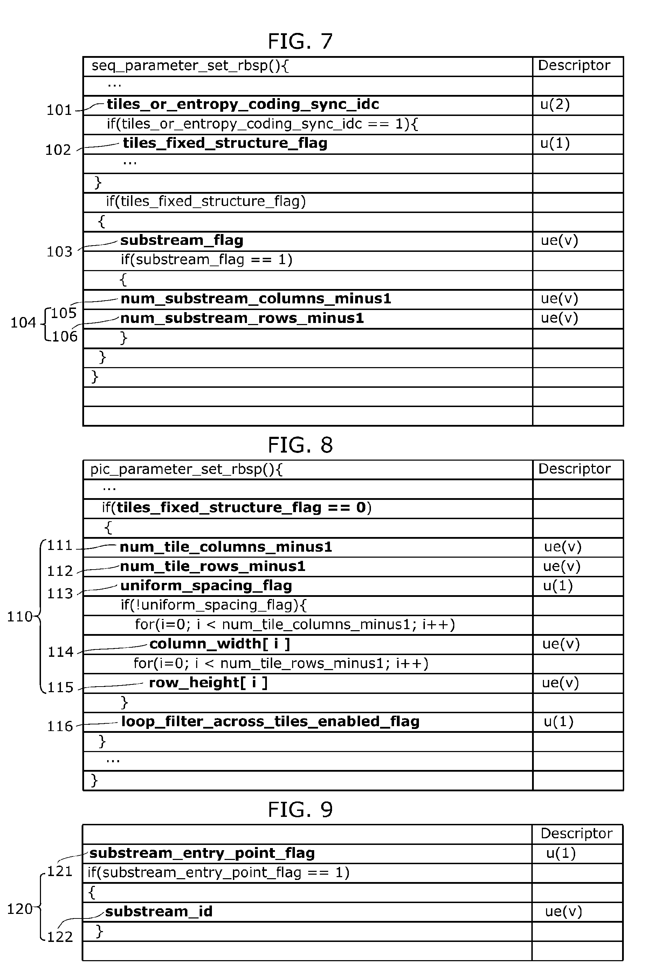

FIG. 7 to FIG. 9 are diagrams each illustrating a syntax example of an encoded bitstream structure according to the present embodiment.

FIG. 7 is a diagram indicating a syntax example of a Sequence Parameter set (SPS) included in the encoded bitstream according to the present embodiment. The SPS is control information including plural pictures and is encoded on a per sequence basis.

As illustrated in FIG. 7, the SPS includes tile information (tiles_or_entropy_coding_sync_idc) 101 indicating whether or not the picture has a structure referred to as tiles (tile structure). It is to be noted that the picture has the tile structure when the tile information 101 indicates 1.

When the picture has the tile structure (when the tile information 101 indicates 1), the SPS includes a tile structure fixed flag (tiles-fixed-structure flag) 102 indicating whether the tile structure is changeable (arbitrary) or fixed (constant) among plural pictures. For example, the tile structure fixed flag 102 indicates 1 when the tile structure is fixed, and the tile structure fixed flag 102 indicates 0 when the tile structure is changeable. It is to be noted that the tile structure fixed flag 102 may be limited to 1 during parallel processing.

When the tile structure fixed flag 102 indicates 1, the SPS includes a substream flag (substream_flag) 103 indicating whether or not the encoded bitstream includes a substream (parallel processing unit). In other words, the substream flag 103 indicates whether or not the parallel decoding processing on the encoded bitstream is possible.

When the substream flag 103 indicates 1, the SPS includes partition information (num_substream_columns_minus1 and num_substream_rows_minus1) 104 for partitioning the picture into substreams with a uniform spacing. In other words, the partition information 104 indicates a partition pattern of a picture in the case where the partition boundaries of plural substreams have a uniform spacing. This partition information 104 includes the number of columns (num_substream_columns_minus1) 105 and the number of rows (num_substream_rows_minus1) 106, of the substream included in the picture. Specifically, the number of columns 105 indicates (the number of columns -1) and the number of rows 106 indicates (the number of rows -1), when the picture is partitioned with a uniform spacing.

FIG. 8 is a diagram indicating a syntax example of a Picture Parameter Set (PPS) included in the encoded bitstream according to the present embodiment. The PPS is control information encoded on a per picture basis. The PPS includes the tile structure information 110 indicating the tile structure only when the tile structure fixed flag 102 indicates 0. In other words, the tile structure information 110 indicates a partition pattern for the plural tiles. Specifically, this tile structure information 110 includes: the number of columns (num_tile_columns_minus1) 111 included in the picture; the number of rows (num_tile_rows_minus1) 112 included in the picture; and the uniform-spacing flag (uniform_spacing_flag) 113 indicating whether or not the space between tiles is uniform. In other words, the uniform-spacing flag 113 indicates whether or not partition boundaries of the plural tiles are uniformly spaced. Furthermore, when the tiles are not uniformly spaced, the tile structure information 110 includes the width of each column (column_width[i]) 114 and the height of each row (row_height[i]) 115.

This allows reducing the coded information and thus allows improving the coding efficiency.

Furthermore, the PPS includes a loop filter enabled flag (loop_filter_across_tiles_enabled_flag) 116 indicating whether or not the loop filter processing is performed on tile boundaries.

Although the tile structure fixed flag 102 is limited to 1 during the parallel processing in the above description, this is not an only example. The above is an example in which the tile structure fixed flag 102 and the substream flag 103 are combined, which leads to a reduction of one bit as compared to a normal case. For example, the image encoding apparatus or the image decoding apparatus may encode or decode the substream flag 103 regardless of the value of the tile structure fixed flag 102.

Furthermore, as illustrated in FIG. 9, the encoded bitstream includes the parallel processing entry point information 120 indicating one of the plural tiles that is an entry point for the parallel decoding processing (an entry point for substream) performed by the image decoding apparatus. This parallel processing entry point information 120 includes: the parallel processing entry point flag (substream_entry_point_flag) 121 indicating whether or not the current tile to be processed is an entry point for parallel processing (is the beginning of the substream); and a substream identifier (substream_id) 122 which is an identification number of the substream (parallel processing unit) which begins from the current tile. It is to be noted that the number of tiles which are the entry points for parallel processing indicated in the parallel processing entry point information 120 and are included in a picture may be less than the total number of the plural tiles included in the picture.

Furthermore, as described above, the encoded bitstream includes tile position information indicating the positions of the plural tiles. For example, the tile position information is start code indicating a tile entry point. Specifically, the parallel processing entry point information 120 is different from the tile position information. In other words, the parallel processing entry point information 120 is set in addition to the tile position information. Furthermore, in an encoded bitstream, the parallel processing entry point information 120 is located behind the tile position information.

The use of such an encoded bitstream allows the image decoding apparatus to search for units on which the parallel processing is possible from the structure in which plural pictures are partitioned.

Hereinafter, description is provided on the decoding processing when a slice header is located at the beginning of a tile boundary as illustrated in FIG. 3.

In Tiles, since the screen can be uniformly partitioned into rectangular units (matrix), the width of the regions obtained by the partitioning in the horizontal direction can be reduced. Thus, Tiles produces an advantageous effect that a necessary memory size can be reduced for an image having a greater width in the horizontal direction (for example, an image having a resolution referred to as 4K or 8K). Furthermore, since it is easier to uniformly partition pixel data in the tile region, the parallel processing is facilitated. Thus, starting parallel decoding from the beginning of the tile is important for efficient parallel decoding processing.

It is to be noted that the entropy decoder is configured to be able to recognize the position of beginning of the slice header easily, which allows the entropy decoder to search only the slice header in advance and obtain the header information. Thus, limiting to this configuration ensures the presence of a slice header at the position of beginning of a tile. Accordingly, based on the slice header, the image decoding apparatus can easily identify the entry point of the tile, which is the entry point of the parallel decoding processing. Furthermore, since information necessary for decoding processing is included in the slice header, buffering of the information in the slice header in advance of decoding is not required.

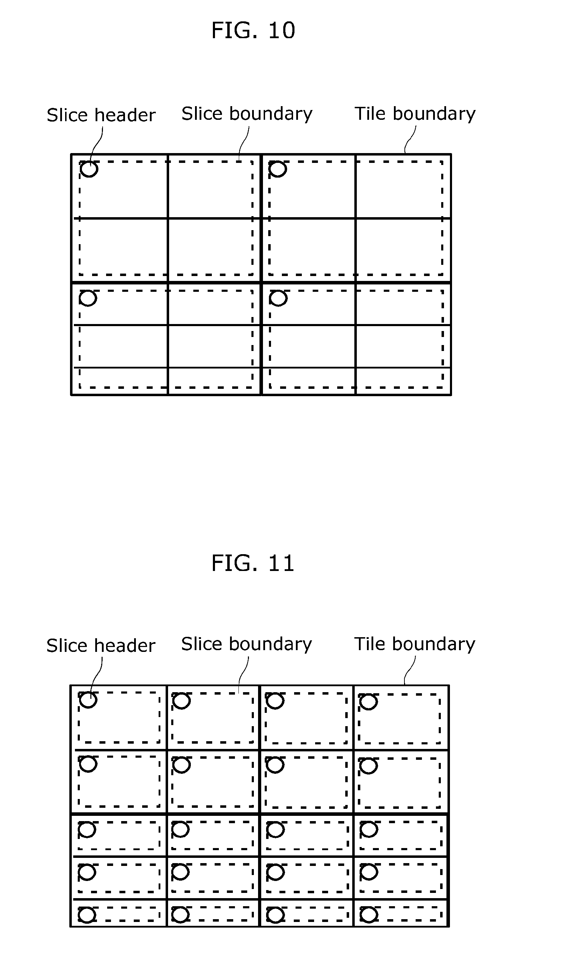

As described above, even when there is a very large number of tile structures which partition a picture into plural units as illustrated in FIG. 10 and FIG. 11, the image decoding apparatus according to the present embodiment can easily search, for example, four substreams (processing units on which parallel decoding processing can be performed). Thus, the image decoding apparatus can easily implement the parallel processing on various bit-stream structures.

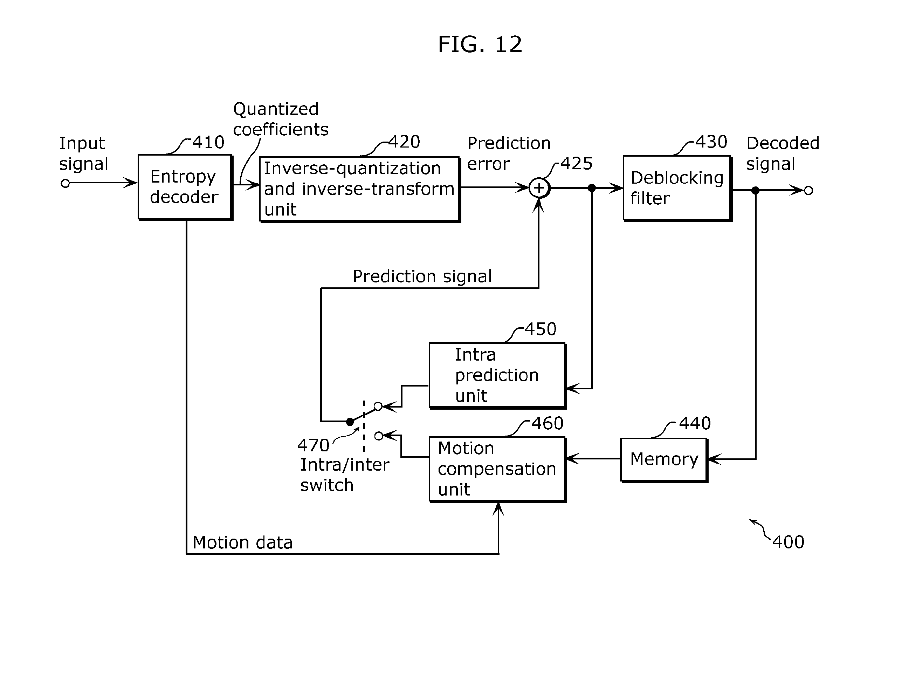

It is to be noted that the parallel decoding processing according to the present embodiment is performed by an image decoding apparatus which decodes compression-encoded image data. FIG. 12 is a block diagram illustrating an example of a configuration of an image decoding apparatus 400 according to the present embodiment. It is to be noted that the parallel decoding processing illustrated in FIG. 5 or FIG. 6 is performed by an entropy decoder 410.

The image decoding apparatus 400 decodes compression-encoded image data (input signal), to generate a decoded signal. For example, encoded image data is inputted to the image decoding apparatus 400 on a per block basis. The image decoding apparatus 400 performs variable length decoding, inverse quantization, and inverse transform on the input signal, to reconstruct the image data.

As illustrated in FIG. 12, the image decoding apparatus 400 includes an entropy decoder 410, an inverse-quantization and inverse-transform unit 420, an adder 425, a deblocking filter 430, a memory 440, an intra prediction unit 450, a motion compensation unit 460, and an intra/inter switch 470.

The entropy decoder 410 reconstructs quantized coefficients by performing variable length decoding on the input signal (input stream). Here, the input signal (input stream) is a decoding target signal and corresponds to data of each block of the encoded image data. In addition, the entropy decoder 410 obtains motion data from the input signal, and outputs the obtained motion data to the motion compensation unit 460.

The inverse-quantization and inverse-transform unit 420 reconstructs transform coefficients by performing inverse quantization on the quantized coefficients reconstructed by the entropy decoder 410. Next, the inverse-quantization and inverse-transform unit 420 reconstructs a prediction error by performing inverse transform on the reconstructed transform coefficients.

The adder 425 adds the reconstructed prediction error and the prediction signal to generate a decoded image.

The deblocking filter 430 performs a deblocking filtering process on the generated decoded image. The decoded image after being subjected to the deblocking filtering process is output as a decoded signal.

The memory 440 is a memory for storing reference images for use in motion compensation. More specifically, the memory 440 stores decoded images after being subjected to the deblocking filtering process.

The intra prediction unit 450 performs intra prediction to generate a prediction signal (an intra prediction signal). More specifically, the intra prediction unit 450 performs intra prediction with reference to an image neighboring a decoding target block (an input signal) in a decoded image generated by the adder 425, to generate an intra prediction signal.

The motion compensation unit 460 performs motion compensation based on motion data output from the entropy decoder 410, to generate a prediction signal (an inter prediction signal).

The intra/inter switch 470 selects one of the intra prediction signal and the inter prediction signal, and outputs the selected signal as a prediction signal to the adder 425.

With this structure, the image decoding apparatus 400 according to the present embodiment decodes the compression-encoded image data.

As described above, with the image decoding apparatus and the image decoding method according to the present embodiment, the processing entry point of the bitstream supported by the image decoding apparatus can be easily determined. Specifically, with the image decoding apparatus and the image decoding method, it is easy to determine whether or not the position parsed (analyzed) by the slice header is the beginning of the tile. This provides faster image decoding apparatus.

Furthermore, these configurations make it easier to estimate the processing time. Thus, the image decoding apparatus can be provided with high-speed arithmetic circuitry for use in real-time reproducing processing of high-resolution videos, for example.

Hereinafter, description is provided on an image encoding method and an image encoding apparatus according to the present embodiment. This image encoding apparatus generates, through encoding, a code stream which allows an easy execution of parallel processing, and transmits the generated code stream. Specifically, the image encoding apparatus transmits to the image decoding apparatus information indicating whether or not the position of beginning of a tile is the beginning of the parallel processing. Thus, the image encoding apparatus can generate a bitstream which increases the parallel degree of the decoding processing.

The image encoding apparatus according to the present embodiment determines, when encoding a slice header, whether or not the position is the beginning of the tile. When the position is the beginning of the tile, the image encoding apparatus includes information indicated in FIG. 7, FIG. 8, and FIG. 9 into the bitstream, for example.

This allows the image encoding apparatus to generate an encoded bitstream in which the parallel processing can be started easily with the image decoding apparatus.

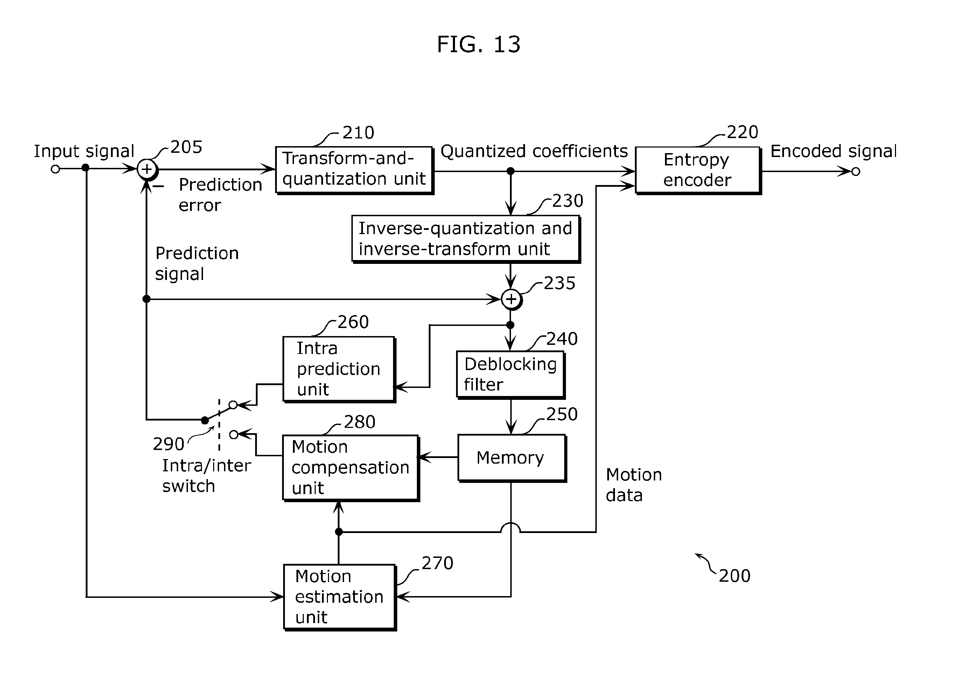

FIG. 13 is a block diagram illustrating an example of a configuration of an image encoding apparatus according to the present embodiment. The image encoding apparatus 200 illustrated in FIG. 13 includes: a subtractor 205, a transform-and-quantization unit 210, an entropy encoder 220, an inverse-quantization and inverse-transform unit 230, an adder 235, a deblocking filter 240, a memory 250, an intra prediction unit 260, a motion estimation unit 270, a motion compensation unit 280, and an intra/inter switch 290.

The subtractor 205 calculates a difference between the input signal and a prediction signal, that is, a prediction error.

The transform-and-quantization unit 210 transforms the prediction error in a spatial domain to generate transform coefficients in a frequency domain. For example, the transform-and-quantization unit 210 performs a Discrete Cosine Transform (DCT) on the prediction error to generate transform coefficients. Furthermore, the transform-and-quantization unit 210 quantizes the transform coefficients to generate quantized coefficients.

The entropy encoder 220 performs variable-length encoding on the quantized coefficients to generate an encoded signal. In addition, the entropy encoder 220 encodes the motion data (such as a motion vector) estimated by the motion estimation unit 270, and outputs an encoded signal including the motion data.

The inverse-quantization and inverse-transform unit 230 performs inverse quantization on the quantized coefficients to reconstruct the transform coefficients. Furthermore, the inverse-quantization and inverse-transform unit 230 performs inverse transform on the reconstructed transform coefficients to reconstruct a prediction error. Here, the reconstructed prediction error suffers from an information loss resulting from the quantization and does not match a prediction error which is generated by the subtractor 205. In other words, the reconstructed prediction error includes a quantization difference.

The adder 235 adds the reconstructed prediction error and the prediction signal to generate a locally decoded image.

The deblocking filter 240 performs a deblocking filtering process on the generated locally decoded image.

The memory 250 is a memory for storing reference images for use in motion compensation. More specifically, the memory 250 stores locally decoded images after being subjected to the deblocking filtering process.

The intra prediction unit 260 performs intra prediction to generate a prediction signal (an intra prediction signal). More specifically, the intra prediction unit 260 performs intra prediction with reference to an image neighboring an encoding target block (an input signal) in the locally decoded image generated by the adder 235, to generate an intra prediction signal.

The motion estimation unit 270 estimates motion data (such as a motion vector) between the input signal and a reference image stored in the memory 250.

The motion compensation unit 280 performs motion compensation based on the estimated motion data, to generate a prediction signal (an inter prediction signal).

The intra/inter switch 290 selects one of the intra prediction signal and the inter prediction signal, and outputs the selected signal as a prediction signal to the subtractor 205 and the adder 235.

With this structure, the image coding apparatus 200 according to the present embodiment compression-encodes the image data.

It is to be noted that the encoding of the flag for discerning whether or not the slice header is the beginning of the tile (the parallel processing entry point information 120) is performed by the entropy encoder 220.

As described above, in the image encoding apparatus and the image encoding method according to the present embodiment, information on a decoding processing order is transmitted to the image decoding apparatus. Thus, the image encoding apparatus and the image encoding method can generate a bitstream which can be processed at high speed by the image decoding apparatus.

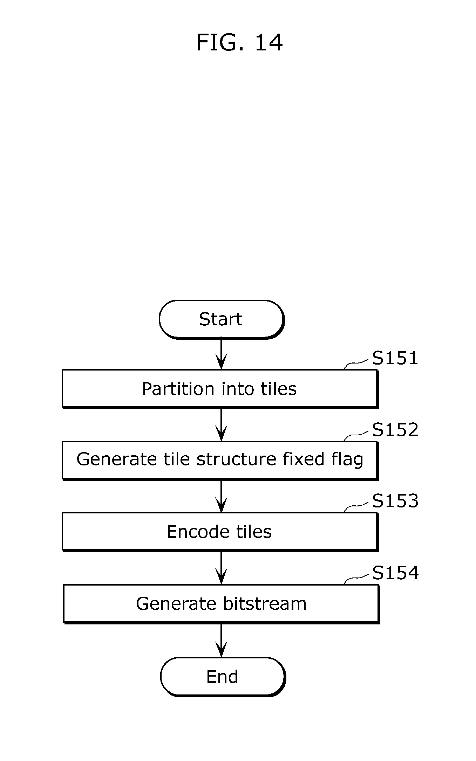

Furthermore, as described above, the image encoding apparatus according to the present embodiment partitions each of plural pictures into plural tiles (S151) as illustrated in FIG. 14. For example, the image encoding apparatus determines a partition pattern for the plural tiles according to an external instruction, coding efficiency, or the like. Next, the image encoding apparatus generates a tile structure fixed flag 102 indicating whether or not a partition pattern for the plural tiles is same (fixed) among the plural pictures (S152). Next, the image encoding apparatus encodes the plural tiles to generate plural encoded signals (S153). Next, the image encoding apparatus generates an encoded bitstream including the plural encoded signals and the tile structure fixed flag 102 (S154).

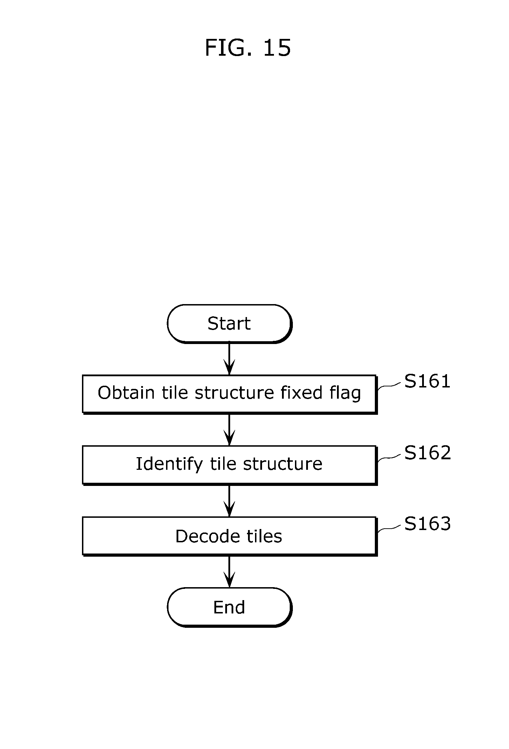

Furthermore, the image decoding apparatus according to the present embodiment obtains a tile structure fixed flag 102 included in an encoded bitstream and indicating whether or not a partition pattern for the plural tiles is same among the plural pictures (S161), as illustrated in FIG. 15. Next, the image decoding apparatus identifies a tile structure based on the tile structure fixed flag 102 (S162). Next, the image decoding apparatus generates plural decoded signals by performing decoding on plural encoded signals included in the encoded bitstream and corresponding to each of the plural tiles, according to the identified tile structure (S163).

Furthermore, as described above, the encoded bitstream includes the tile information 101, the tile structure fixed flag 102, the substream flag 103, the partition information 104, the tile structure information 110, the loop filter enabled flag 116, the parallel processing entry point information 120, and the tile position information. In other words, the image encoding apparatus generates such information and generates an encoded bitstream including such information. Furthermore, the image decoding apparatus obtains such information from the encoded bitstream and performs decoding processing using such information. Specifically, the image decoding apparatus determines whether or not the tile structure is adopted based on the tile information 101. When tile structure is adopted, the image decoding apparatus identifies the tile structure based on the tile structure fixed flag 102, the tile structure information 110, and the tile position information. Then, the image decoding apparatus decodes the plural encoded signals corresponding to each of the plural tiles according to the identified tile structure. Furthermore, the image decoding apparatus identifies a unit for parallel decoding processing (substream) based on the substream flag 103, the partition information 104, and the parallel processing entry point information 120, and performs parallel decoding processing on the plural tiles according to the identified unit for the parallel decoding processing.

The above has described an image encoding apparatus and an image decoding apparatus according to the embodiments. However, the present invention is not limited to these embodiments.

Furthermore, a part or all of the processing units included in the image encoding apparatus and the image decoding apparatus according to the above embodiments are typically implemented by large scale integration (LSI) which is integrated circuitry. These may be integrated into one chip separately, or may be integrated into one chip to include part or all of the constituents.

The integration may be achieved, not only as a LSI, but also as dedicated circuitry or a general purpose processor. A Field Programmable array which is programmable after manufacturer or reconfigurable processor in which connection or setting of circuit cell inside the LSI can be reconfigured.

It is to be noted that in each of the above non-limiting embodiments, each constituent element may be implemented by being configured with a dedicated hardware or being executed by a software program appropriate for each constituent element. Each constituent element may be implemented by reading and executing the software program recorded in a hard disk or a recording medium such as a semiconductor memory, by a program execution unit such as a CPU or a processor.

In other words, the image encoding apparatus and the image decoding apparatus includes control circuitry and storage electrically connected to the control circuitry (accessible from the control circuitry). The control circuitry includes at least one of dedicated hardware and a program execution unit. Furthermore, the storage stores a software program executed by the program execution unit, when the control circuitry includes the program execution unit.

Furthermore, the present invention may include the above-described software program and a non-transitory computer-readable recording medium having such a computer program recoded therein. Furthermore, the program may be distributed via a transmission medium such as the Internet.

All the figures used above are provided for purposes of illustration of the present invention, and the present invention is not limited to these figures.

Furthermore, the division of the functional block in the block diagrams is just an example. The functional blocks may be realized as a single functional block, the single functional block may be divided into functional blocks, or part of the function may be moved to another functional block. Furthermore, functions of functional blocks having a function similar to one another may be processed by single hardware or software in parallel or in a time-sharing manner.

Furthermore, the order of the steps included in the image encoding method and the image decoding method are performed is shown only to exemplify the present invention specifically, and the order is not limited to the above. Furthermore, part of the above steps may be performed simultaneously (parallely) with another step.

Although the image encoding apparatus and the image decoding apparatus according to one or more forms of the present invention has been described based on the embodiments, the present invention is not limited to these embodiments. Other forms in which various modifications apparent to those skilled in the art are applied to the embodiments, or forms structured by combining constituent elements of different embodiments are included within the scope of the present invention, unless such changes and modifications depart from the scope of the present invention.

### (Embodiment 2)

The processing described in each of embodiments can be simply implemented in an independent computer system, by recording, in a recording medium, one or more programs for implementing the configurations of the moving picture encoding method (image encoding method) and the moving picture decoding method (image decoding method) described in each of embodiments. The recording media may be any recording media as long as the program can be recorded, such as a magnetic disk, an optical disk, a magnetic optical disk, an IC card, and a semiconductor memory.

Hereinafter, the applications to the moving picture encoding method (image encoding method) and the moving picture decoding method (image decoding method) described in each of embodiments and systems using thereof will be described. The system has a feature of having an image encoding and decoding apparatus that includes an image encoding apparatus using the image encoding method and an image decoding apparatus using the image decoding method. Other configurations in the system can be changed as appropriate depending on the cases.

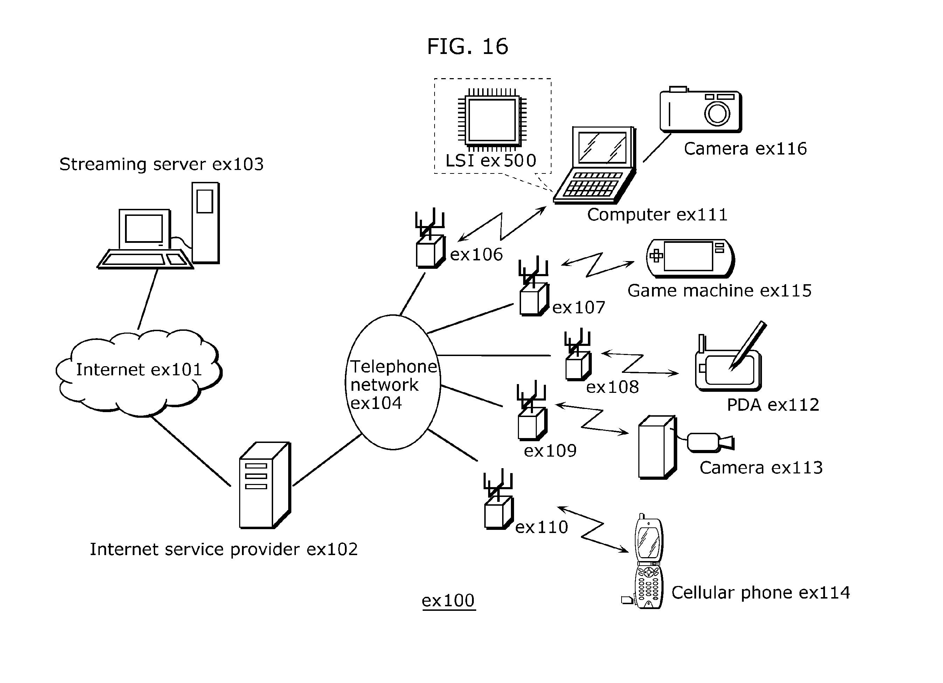

FIG. 16 illustrates an overall configuration of a content providing system ex100 for implementing content distribution services. The area for providing communication services is divided into cells of desired size, and base stations ex106, ex107, ex108, ex109, and ex110 which are fixed wireless stations are placed in each of the cells.

The content providing system ex100 is connected to devices, such as a computer ex111, a personal digital assistant (PDA) ex112, a camera ex113, a cellular phone ex114 and a game machine ex115, via the Internet ex101, an Internet service provider ex102, a telephone network ex104, as well as the base stations ex106 to ex110, respectively.

However, the configuration of the content providing system ex100 is not limited to the configuration shown in FIG. 16, and a combination in which any of the elements are connected is acceptable. In addition, each device may be directly connected to the telephone network ex104, rather than via the base stations ex106 to ex110 which are the fixed wireless stations. Furthermore, the devices may be interconnected to each other via a short distance wireless communication and others.

The camera ex113, such as a digital video camera, is capable of capturing video. A camera ex116, such as a digital camera, is capable of capturing both still images and video. Furthermore, the cellular phone ex114 may be the one that meets any of the standards such as Global System for Mobile Communications (GSM) (registered trademark), Code Division Multiple Access (CDMA), Wideband-Code Division Multiple Access (W-CDMA), Long Term Evolution (LTE), and High Speed Packet Access (HSPA). Alternatively, the cellular phone ex114 may be a Personal Handyphone System (PHS).

In the content providing system ex100, a streaming server ex103 is connected to the camera ex113 and others via the telephone network ex104 and the base station ex109, which enables distribution of images of a live show and others. In such a distribution, a content (for example, video of a music live show) captured by the user using the camera ex113 is encoded as described above in each of embodiments (i.e., the camera functions as the image encoding apparatus according to an aspect of the present invention), and the encoded content is transmitted to the streaming server ex103. On the other hand, the streaming server ex103 carries out stream distribution of the transmitted content data to the clients upon their requests. The clients include the computer ex111, the PDA ex112, the camera ex113, the cellular phone ex114, and the game machine ex115 that are capable of decoding the above-mentioned encoded data. Each of the devices that have received the distributed data decodes and reproduces the encoded data (i.e., functions as the image decoding apparatus according to an aspect of the present invention).

The captured data may be encoded by the camera ex113 or the streaming server ex103 that transmits the data, or the encoding processes may be shared between the camera ex113 and the streaming server ex103. Similarly, the distributed data may be decoded by the clients or the streaming server ex103, or the decoding processes may be shared between the clients and the streaming server ex103. Furthermore, the data of the still images and video captured by not only the camera ex113 but also the camera ex116 may be transmitted to the streaming server ex103 through the computer ex111. The encoding processes may be performed by the camera ex116, the computer ex111, or the streaming server ex103, or shared among them.

Furthermore, the encoding and decoding processes may be performed by an LSI ex500 generally included in each of the computer ex111 and the devices. The LSI ex500 may be configured of a single chip or a plurality of chips. Software for encoding and decoding video may be integrated into some type of a recording medium (such as a CD-ROM, a flexible disk, and a hard disk) that is readable by the computer ex111 and others, and the encoding and decoding processes may be performed using the software. Furthermore, when the cellular phone ex114 is equipped with a camera, the video data obtained by the camera may be transmitted. The video data is data encoded by the LSI ex500 included in the cellular phone ex114.

Furthermore, the streaming server ex103 may be composed of servers and computers, and may decentralize data and process the decentralized data, record, or distribute data.

As described above, the clients may receive and reproduce the encoded data in the content providing system ex100. In other words, the clients can receive and decode information transmitted by the user, and reproduce the decoded data in real time in the content providing system ex100, so that the user who does not have any particular right and equipment can implement personal broadcasting.

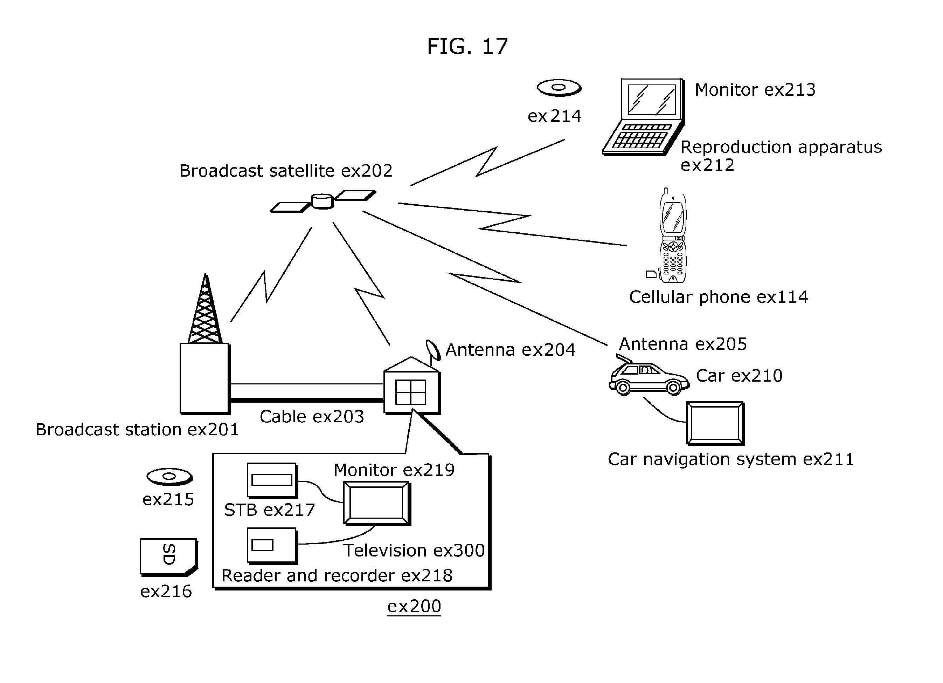

Aside from the example of the content providing system ex100, at least one of the moving picture encoding apparatus (image encoding apparatus) and the moving picture decoding apparatus (image decoding apparatus) described in each of embodiments may be implemented in a digital broadcasting system ex200 illustrated in FIG. 17. More specifically, a broadcast station ex201 communicates or transmits, via radio waves to a broadcast satellite ex202, multiplexed data obtained by multiplexing audio data and others onto video data. The video data is data encoded by the moving picture encoding method described in each of embodiments (i.e., data encoded by the image encoding apparatus according to an aspect of the present invention). Upon receipt of the multiplexed data, the broadcast satellite ex202 transmits radio waves for broadcasting. Then, a home-use antenna ex204 with a satellite broadcast reception function receives the radio waves. Next, a device such as a television (receiver) ex300 and a set top box (STB) ex217 decodes the received multiplexed data, and reproduces the decoded data (i.e., functions as the image decoding apparatus according to an aspect of the present invention).

Furthermore, a reader/recorder ex218 (i) reads and decodes the multiplexed data recorded on a recording medium ex215, such as a DVD and a BD, or (i) encodes video signals in the recording medium ex215, and in some cases, writes data obtained by multiplexing an audio signal on the encoded data. The reader/recorder ex218 can include the moving picture decoding apparatus or the moving picture encoding apparatus as shown in each of embodiments. In this case, the reproduced video signals are displayed on the monitor ex219, and can be reproduced by another device or system using the recording medium ex215 on which the multiplexed data is recorded. It is also possible to implement the moving picture decoding apparatus in the set top box ex217 connected to the cable ex203 for a cable television or to the antenna ex204 for satellite and/or terrestrial broadcasting, so as to display the video signals on the monitor ex219 of the television ex300. The moving picture decoding apparatus may be implemented not in the set top box but in the television ex300.

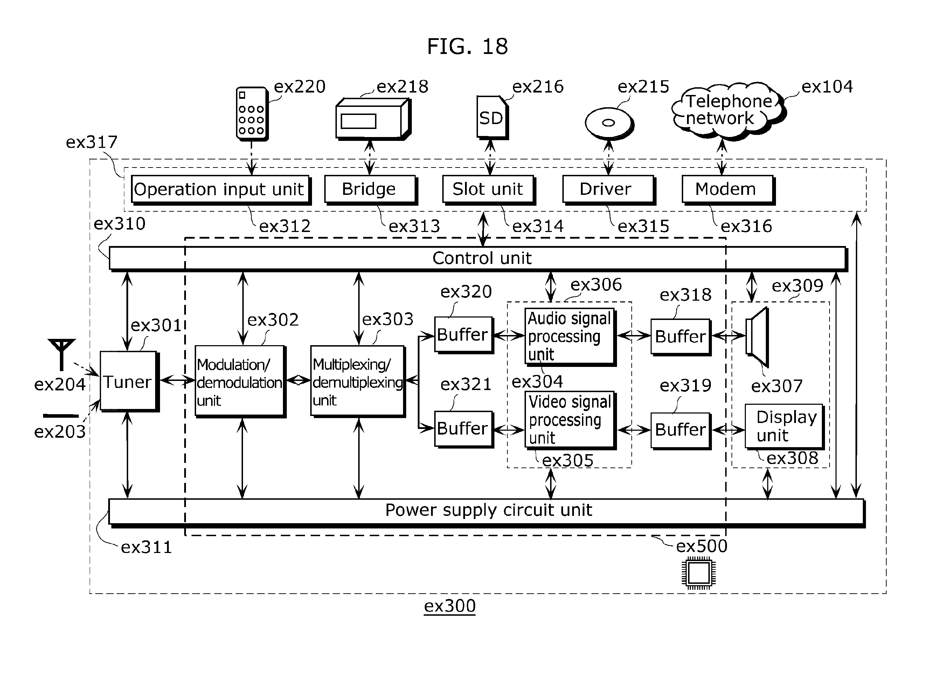

FIG. 18 illustrates the television (receiver) ex300 that uses the moving picture encoding method and the moving picture decoding method described in each of embodiments. The television ex300 includes: a tuner ex301 that obtains or provides multiplexed data obtained by multiplexing audio data onto video data, through the antenna ex204 or the cable ex203, etc. that receives a broadcast; a modulation/demodulation unit ex302 that demodulates the received multiplexed data or modulates data into multiplexed data to be supplied outside; and a multiplexing/demultiplexing unit ex303 that demultiplexes the modulated multiplexed data into video data and audio data, or multiplexes video data and audio data encoded by a signal processing unit ex306 into data.

The television ex300 further includes: a signal processing unit ex306 including an audio signal processing unit ex304 and a video signal processing unit ex305 that decode or encode audio data and video data, respectively (which function as the image encoding apparatus and the image decoding apparatus according to an aspect of the present invention); and an output unit ex309 including a speaker ex307 that provides the decoded audio signal, and a display unit ex308 that displays the decoded video signal, such as a display. Furthermore, the television ex300 includes an interface unit ex317 including an operation input unit ex312 that receives an input of a user operation. Furthermore, the television ex300 includes a control unit ex310 that controls overall each constituent element of the television ex300, and a power supply circuit unit ex311 that supplies power to each of the elements. Other than the operation input unit ex312, the interface unit ex317 may include: a bridge ex313 that is connected to an external device, such as the reader/recorder ex218; a slot unit ex314 for enabling attachment of the recording medium ex216, such as an SD card; a driver ex315 to be connected to an external recording medium, such as a hard disk; and a modem ex316 to be connected to a telephone network. Here, the recording medium ex216 can electrically record information using a non-volatile/volatile semiconductor memory element for storage. The constituent elements of the television ex300 are connected to each other through a synchronous bus.

First, the configuration in which the television ex300 decodes multiplexed data obtained from outside through the antenna ex204 and others and reproduces the decoded data will be described. In the television ex300, upon a user operation through a remote controller ex220 and others, the multiplexing/demultiplexing unit ex303 demultiplexes the multiplexed data demodulated by the modulation/demodulation unit ex302, under control of the control unit ex310 including a CPU. Furthermore, the audio signal processing unit ex304 decodes the demultiplexed audio data, and the video signal processing unit ex305 decodes the demultiplexed video data, using the decoding method described in each of embodiments, in the television ex300. The output unit ex309 provides the decoded video signal and audio signal outside, respectively. When the output unit ex309 provides the video signal and the audio signal, the signals may be temporarily stored in buffers ex318 and ex319, and others so that the signals are reproduced in synchronization with each other. Furthermore, the television ex300 may read multiplexed data not through a broadcast and others but from the recording media ex215 and ex216, such as a magnetic disk, an optical disk, and a SD card. Next, a configuration in which the television ex300 encodes an audio signal and a video signal, and transmits the data outside or writes the data on a recording medium will be described. In the television ex300, upon a user operation through the remote controller ex220 and others, the audio signal processing unit ex304 encodes an audio signal, and the video signal processing unit ex305 encodes a video signal, under control of the control unit ex310 using the encoding method described in each of embodiments. The multiplexing/demultiplexing unit ex303 multiplexes the encoded video signal and audio signal, and provides the resulting signal outside. When the multiplexing/demultiplexing unit ex303 multiplexes the video signal and the audio signal, the signals may be temporarily stored in the buffers ex320 and ex321, and others so that the signals are reproduced in synchronization with each other. Here, the buffers ex318, ex319, ex320, and ex321 may be plural as illustrated, or at least one buffer may be shared in the television ex300. Furthermore, data may be stored in a buffer so that the system overflow and underflow may be avoided between the modulation/demodulation unit ex302 and the multiplexing/demultiplexing unit ex303, for example.

Furthermore, the television ex300 may include a configuration for receiving an AV input from a microphone or a camera other than the configuration for obtaining audio and video data from a broadcast or a recording medium, and may encode the obtained data. Although the television ex300 can encode, multiplex, and provide outside data in the description, it may be capable of only receiving, decoding, and providing outside data but not the encoding, multiplexing, and providing outside data.

Furthermore, when the reader/recorder ex218 reads or writes multiplexed data from or on a recording medium, one of the television ex300 and the reader/recorder ex218 may decode or encode the multiplexed data, and the television ex300 and the reader/recorder ex218 may share the decoding or encoding partly.

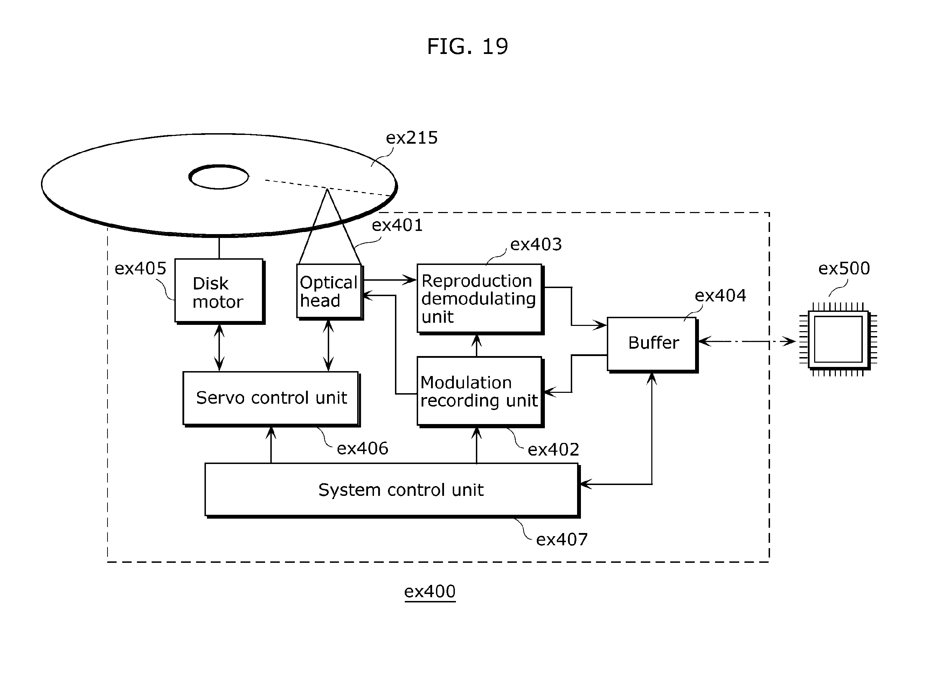

As an example, FIG. 19 illustrates a configuration of an information reproducing/recording unit ex400 when data is read or written from or on an optical disk. The information reproducing/recording unit ex400 includes constituent elements ex401, ex402, ex403, ex404, ex405, ex406, and ex407 to be described hereinafter. The optical head ex401 irradiates a laser spot in a recording surface of the recording medium ex215 that is an optical disk to write information, and detects reflected light from the recording surface of the recording medium ex215 to read the information. The modulation recording unit ex402 electrically drives a semiconductor laser included in the optical head ex401, and modulates the laser light according to recorded data. The reproduction demodulating unit ex403 amplifies a reproduction signal obtained by electrically detecting the reflected light from the recording surface using a photo detector included in the optical head ex401, and demodulates the reproduction signal by separating a signal component recorded on the recording medium ex215 to reproduce the necessary information. The buffer ex404 temporarily holds the information to be recorded on the recording medium ex215 and the information reproduced from the recording medium ex215. The disk motor ex405 rotates the recording medium ex215. The servo control unit ex406 moves the optical head ex401 to a predetermined information track while controlling the rotation drive of the disk motor ex405 so as to follow the laser spot. The system control unit ex407 controls overall the information reproducing/recording unit ex400. The reading and writing processes can be implemented by the system control unit ex407 using various information stored in the buffer ex404 and generating and adding new information as necessary, and by the modulation recording unit ex402, the reproduction demodulating unit ex403, and the servo control unit ex406 that record and reproduce information through the optical head ex401 while being operated in a coordinated manner. The system control unit ex407 includes, for example, a microprocessor, and executes processing by causing a computer to execute a program for read and write.

Although the optical head ex401 irradiates a laser spot in the description, it may perform high-density recording using near field light.

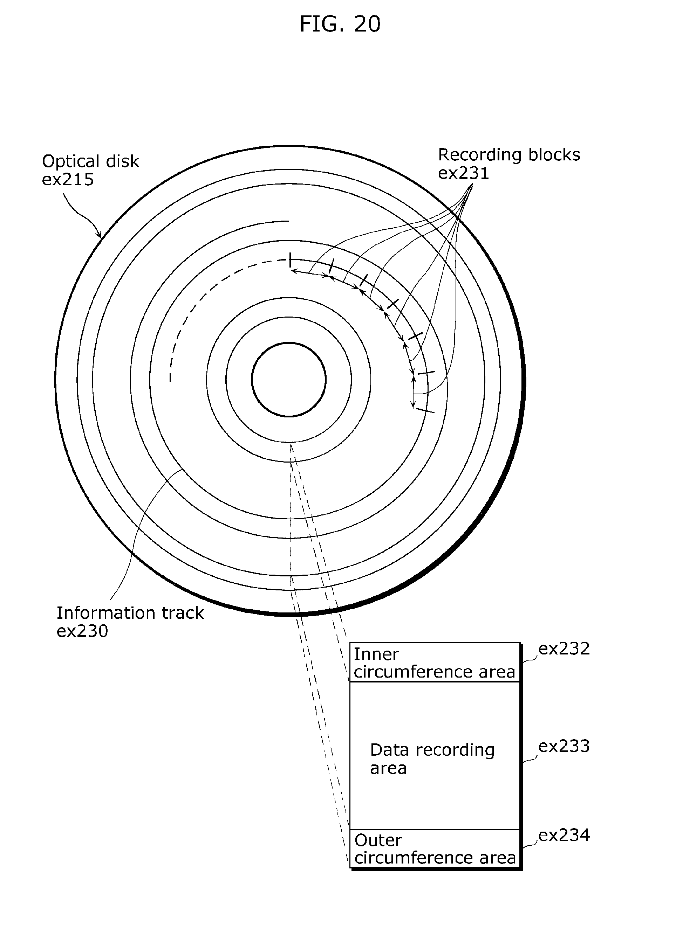

FIG. 20 illustrates the recording medium ex215 that is the optical disk. On the recording surface of the recording medium ex215, guide grooves are spirally formed, and an information track ex230 records, in advance, address information indicating an absolute position on the disk according to change in a shape of the guide grooves. The address information includes information for determining positions of recording blocks ex231 that are a unit for recording data. Reproducing the information track ex230 and reading the address information in an apparatus that records and reproduces data can lead to determination of the positions of the recording blocks. Furthermore, the recording medium ex215 includes a data recording area ex233, an inner circumference area ex232, and an outer circumference area ex234. The data recording area ex233 is an area for use in recording the user data. The inner circumference area ex232 and the outer circumference area ex234 that are inside and outside of the data recording area ex233, respectively are for specific use except for recording the user data. The information reproducing/recording unit ex400 reads and writes encoded audio, encoded video data, or multiplexed data obtained by multiplexing the encoded audio and video data, from and on the data recording area ex233 of the recording medium ex215.

Although an optical disk having a layer, such as a DVD and a BD is described as an example in the description, the optical disk is not limited to such, and may be an optical disk having a multilayer structure and capable of being recorded on a part other than the surface. Furthermore, the optical disk may have a structure for multidimensional recording/reproduction, such as recording of information using light of colors with different wavelengths in the same portion of the optical disk and for recording information having different layers from various angles.

Furthermore, a car ex210 having an antenna ex205 can receive data from the satellite ex202 and others, and reproduce video on a display device such as a car navigation system ex211 set in the car ex210, in the digital broadcasting system ex200. Here, a configuration of the car navigation system ex211 will be a configuration, for example, including a GPS receiving unit from the configuration illustrated in FIG. 18. The same will be true for the configuration of the computer ex111, the cellular phone ex114, and others.

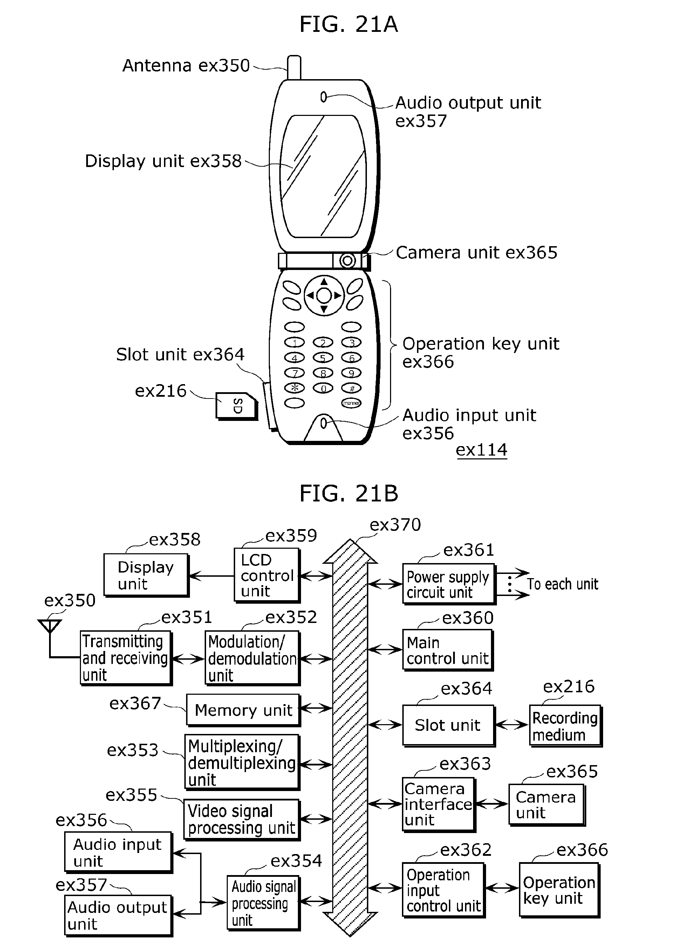

FIG. 21A illustrates the cellular phone ex114 that uses the moving picture decoding method and the moving picture encoding method described in embodiments. The cellular phone ex114 includes: an antenna ex350 for transmitting and receiving radio waves through the base station ex110; a camera unit ex365 capable of capturing moving and still images; and a display unit ex358 such as a liquid crystal display for displaying the data such as decoded video captured by the camera unit ex365 or received by the antenna ex350. The cellular phone ex114 further includes: a main body unit including an operation key unit ex366; an audio output unit ex357 such as a speaker for output of audio; an audio input unit ex356 such as a microphone for input of audio; a memory unit ex367 for storing captured video or still pictures, recorded audio, coded or decoded data of the received video, the still pictures, e-mails, or others; and a slot unit ex364 that is an interface unit for a recording medium that stores data in the same manner as the memory unit ex367.

Next, an example of a configuration of the cellular phone ex114 will be described with reference to FIG. 21B. In the cellular phone ex114, a main control unit ex360 designed to control overall each unit of the main body including the display unit ex358 as well as the operation key unit ex366 is connected mutually, via a synchronous bus ex370, to a power supply circuit unit ex361, an operation input control unit ex362, a video signal processing unit ex355, a camera interface unit ex363, a liquid crystal display (LCD) control unit ex359, a modulation/demodulation unit ex352, a multiplexing/demultiplexing unit ex353, an audio signal processing unit ex354, the slot unit ex364, and the memory unit ex367.

When a call-end key or a power key is turned ON by a user's operation, the power supply circuit unit ex361 supplies the respective units with power from a battery pack so as to activate the cell phone ex114.

In the cellular phone ex114, the audio signal processing unit ex354 converts the audio signals collected by the audio input unit ex356 in voice conversation mode into digital audio signals under the control of the main control unit ex360 including a CPU, ROM, and RAM. Then, the modulation/demodulation unit ex352 performs spread spectrum processing on the digital audio signals, and the transmitting and receiving unit ex351 performs digital-to-analog conversion and frequency conversion on the data, so as to transmit the resulting data via the antenna ex350. Also, in the cellular phone ex114, the transmitting and receiving unit ex351 amplifies the data received by the antenna ex350 in voice conversation mode and performs frequency conversion and the analog-to-digital conversion on the data. Then, the modulation/demodulation unit ex352 performs inverse spread spectrum processing on the data, and the audio signal processing unit ex354 converts it into analog audio signals, so as to output them via the audio output unit ex357.

Furthermore, when an e-mail in data communication mode is transmitted, text data of the e-mail inputted by operating the operation key unit ex366 and others of the main body is sent out to the main control unit ex360 via the operation input control unit ex362. The main control unit ex360 causes the modulation/demodulation unit ex352 to perform spread spectrum processing on the text data, and the transmitting and receiving unit ex351 performs the digital-to-analog conversion and the frequency conversion on the resulting data to transmit the data to the base station ex110 via the antenna ex350. When an e-mail is received, processing that is approximately inverse to the processing for transmitting an e-mail is performed on the received data, and the resulting data is provided to the display unit ex358.

When video, still images, or video and audio in data communication mode is or are transmitted, the video signal processing unit ex355 compresses and encodes video signals supplied from the camera unit ex365 using the moving picture encoding method shown in each of embodiments (i.e., functions as the image encoding apparatus according to the aspect of the present invention), and transmits the encoded video data to the multiplexing/demultiplexing unit ex353. In contrast, during when the camera unit ex365 captures video, still images, and others, the audio signal processing unit ex354 encodes audio signals collected by the audio input unit ex356, and transmits the encoded audio data to the multiplexing/demultiplexing unit ex353.

The multiplexing/demultiplexing unit ex353 multiplexes the encoded video data supplied from the video signal processing unit ex355 and the encoded audio data supplied from the audio signal processing unit ex354, using a predetermined method. Then, the modulation/demodulation unit (modulation/demodulation circuit unit) ex352 performs spread spectrum processing on the multiplexed data, and the transmitting and receiving unit ex351 performs digital-to-analog conversion and frequency conversion on the data so as to transmit the resulting data via the antenna ex350.

When receiving data of a video file which is linked to a Web page and others in data communication mode or when receiving an e-mail with video and/or audio attached, in order to decode the multiplexed data received via the antenna ex350, the multiplexing/demultiplexing unit ex353 demultiplexes the multiplexed data into a video data bitstream and an audio data bitstream, and supplies the video signal processing unit ex355 with the encoded video data and the audio signal processing unit ex354 with the encoded audio data, through the synchronous bus ex370. The video signal processing unit ex355 decodes the video signal using a moving picture decoding method corresponding to the moving picture encoding method shown in each of embodiments (i.e., functions as the image decoding apparatus according to the aspect of the present invention), and then the display unit ex358 displays, for instance, the video and still images included in the video file linked to the Web page via the LCD control unit ex359. Furthermore, the audio signal processing unit ex354 decodes the audio signal, and the audio output unit ex357 provides the audio.

Furthermore, similarly to the television ex300, a terminal such as the cellular phone ex114 probably have 3 types of implementation configurations including not only (i) a transmitting and receiving terminal including both an encoding apparatus and a decoding apparatus, but also (ii) a transmitting terminal including only an encoding apparatus and (iii) a receiving terminal including only a decoding apparatus. Although the digital broadcasting system ex200 receives and transmits the multiplexed data obtained by multiplexing audio data onto video data in the description, the multiplexed data may be data obtained by multiplexing not audio data but character data related to video onto video data, and may be not multiplexed data but video data itself.

As such, the moving picture encoding method and the moving picture decoding method in each of the embodiments can be used in any of the devices and systems described. Thus, the advantages described in each of the embodiments can be obtained.

Furthermore, the present invention is not limited to embodiments, and various modifications and revisions are possible without departing from the scope of the present invention.

### [Embodiment 3]

Video data can be generated by switching, as necessary, between (i) the moving picture encoding method or the moving picture encoding apparatus shown in each of the embodiments and (ii) a moving picture encoding method or a moving picture encoding apparatus in conformity with a different standard, such as MPEG-2, MPEG-4 AVC, and VC-1.

Here, when a plurality of video data that conforms to the different standards is generated and is then decoded, the decoding methods need to be selected to conform to the different standards. However, since to which standard each of the plurality of the video data to be decoded conform cannot be detected, there is a problem that an appropriate decoding method cannot be selected.

In order to solve the problem, multiplexed data obtained by multiplexing audio data and others onto video data has a structure including identification information indicating to which standard the video data conforms. The specific structure of the multiplexed data including the video data generated in the moving picture encoding method and by the moving picture encoding apparatus shown in each of the embodiments will be hereinafter described. The multiplexed data is a digital stream in the MPEG-2 Transport Stream format.

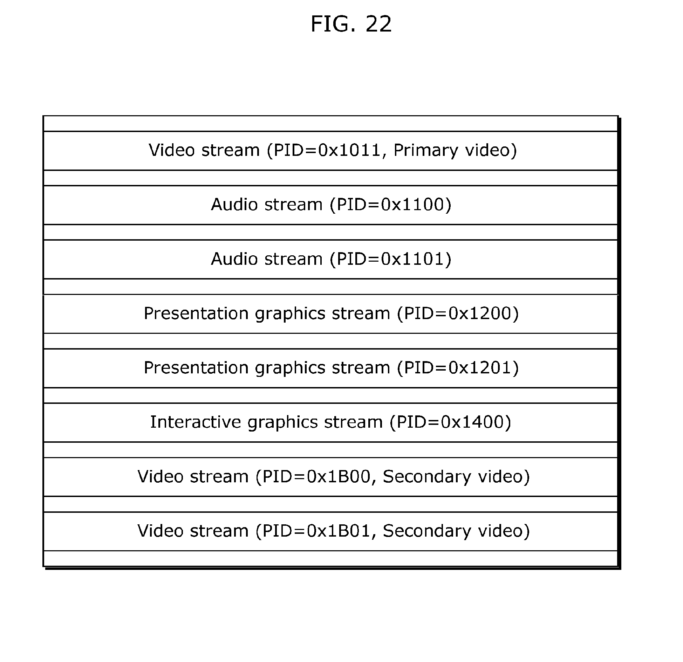

FIG. 22 illustrates a structure of the multiplexed data. As illustrated in FIG. 22, the multiplexed data can be obtained by multiplexing at least one of a video stream, an audio stream, a presentation graphics stream (PG), and an interactive graphics stream. The video stream represents primary video and secondary video of a movie, the audio stream (IG) represents a primary audio part and a secondary audio part to be mixed with the primary audio part, and the presentation graphics stream represents subtitles of the movie. Here, the primary video is normal video to be displayed on a screen, and the secondary video is video to be displayed on a smaller window in the primary video. Furthermore, the interactive graphics stream represents an interactive screen to be generated by arranging the GUI components on a screen. The video stream is encoded in the moving picture encoding method or by the moving picture encoding apparatus shown in each of embodiments, or in a moving picture encoding method or by a moving picture encoding apparatus in conformity with a conventional standard, such as MPEG-2, MPEG-4 AVC, and VC-1. The audio stream is coded in accordance with a standard, such as Dolby-AC-3, Dolby Digital Plus, MLP, DTS, DTS-HD, and linear PCM.

Each stream included in the multiplexed data is identified by PID. For example, 0x1011 is allocated to the video stream to be used for video of a movie, 0x1100 to 0x111F are allocated to the audio streams, 0x1200 to 0x121F are allocated to the presentation graphics streams, 0x1400 to 0x141F are allocated to the interactive graphics streams, 0x1B00 to 0x1B1F are allocated to the video streams to be used for secondary video of the movie, and 0x1A00 to 0x1A1F are allocated to the audio streams to be used for the secondary audio to be mixed with the primary audio.

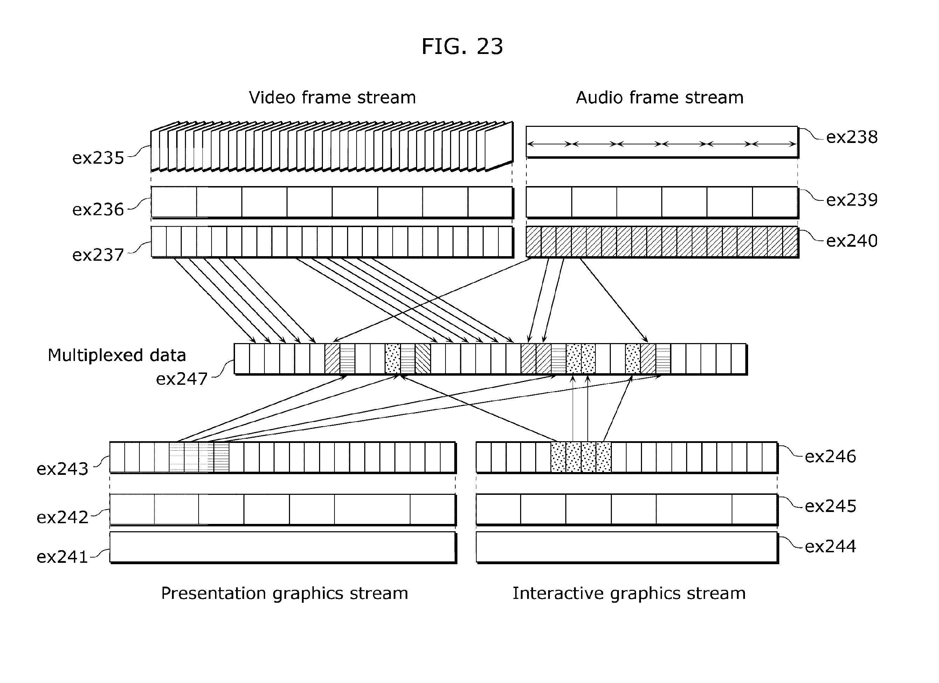

FIG. 23 schematically illustrates how data is multiplexed. First, a video stream ex235 composed of video frames and an audio stream ex238 composed of audio frames are transformed into a stream of PES packets ex236 and a stream of PES packets ex239, and further into TS packets ex237 and TS packets ex240, respectively. Similarly, data of a presentation graphics stream ex241 and data of an interactive graphics stream ex244 are transformed into a stream of PES packets ex242 and a stream of PES packets ex245, and further into TS packets ex243 and TS packets ex246, respectively. These TS packets are multiplexed into a stream to obtain multiplexed data ex247.

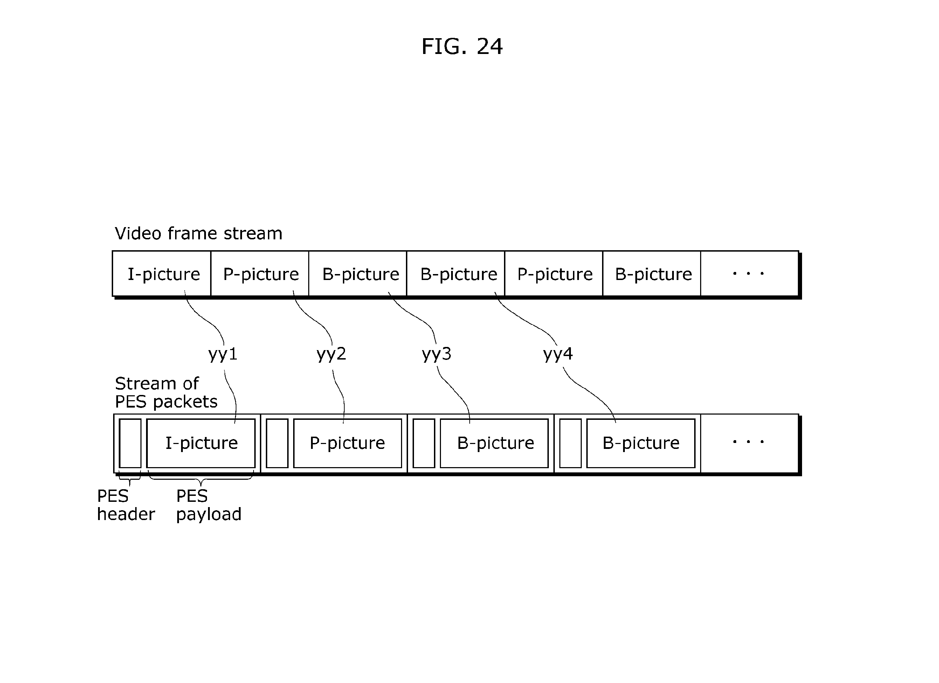

FIG. 24 illustrates how a video stream is stored in a stream of PES packets in more detail. The first bar in FIG. 24 shows a video frame stream in a video stream. The second bar shows the stream of PES packets. As indicated by arrows denoted as yy1, yy2, yy3, and yy4 in FIG. 24, the video stream is divided into pictures as I pictures, B pictures, and P pictures each of which is a video presentation unit, and the pictures are stored in a payload of each of the PES packets. Each of the PES packets has a PES header, and the PES header stores a Presentation Time-Stamp (PTS) indicating a display time of the picture, and a Decoding Time-Stamp (DTS) indicating a decoding time of the picture.

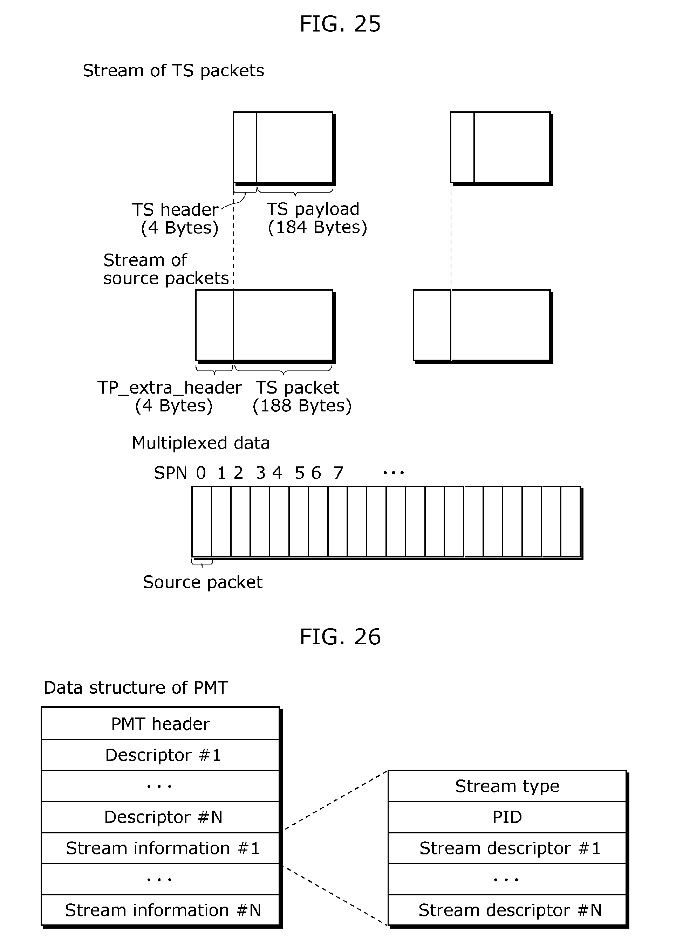

FIG. 25 illustrates a format of TS packets to be finally written on the multiplexed data. Each of the TS packets is a 188-byte fixed length packet including a 4-byte TS header having information, such as a PID for identifying a stream, and a 184-byte TS payload for storing data. The PES packets are divided, and stored in the TS payloads, respectively. When a BD ROM is used, each of the TS packets is given a 4-byte TP_Extra_Header, thus resulting in 192-byte source packets. The source packets are written on the multiplexed data. The TP_Extra_Header stores information such as an Arrival_Time_Stamp (ATS). The ATS shows a transfer start time at which each of the TS packets is to be transferred to a PID filter. The source packets are arranged in the multiplexed data as shown at the bottom of FIG. 25. The numbers incrementing from the head of the multiplexed data are called source packet numbers (SPNs).

Each of the TS packets included in the multiplexed data includes not only streams of audio, video, subtitles and others, but also a Program Association Table (PAT), a Program Map Table (PMT), and a Program Clock Reference (PCR). The PAT shows what a PID in a PMT used in the multiplexed data indicates, and a PID of the PAT itself is registered as zero. The PMT stores PIDs of the streams of video, audio, subtitles and others included in the multiplexed data, and attribute information of the streams corresponding to the PIDs. The PMT also has various descriptors relating to the multiplexed data. The PMT also has various descriptors relating to the multiplexed data. The descriptors have information such as copy control information showing whether copying of the multiplexed data is permitted or not. The PCR stores STC time information corresponding to an ATS showing when the PCR packet is transferred to a decoder, in order to achieve synchronization between an Arrival Time Clock (ATC) that is a time axis of ATSs, and an System Time Clock (STC) that is a time axis of PTSs and DTSs.

FIG. 26 illustrates the data structure of the PMT in detail. A PMT header is disposed at the top of the PMT. The PMT header describes the length of data included in the PMT and others. A plurality of descriptors relating to the multiplexed data is disposed after the PMT header. Information such as the copy control information is described in the descriptors. After the descriptors, a plurality of pieces of stream information relating to the streams included in the multiplexed data is disposed. Each piece of stream information includes stream descriptors each describing information, such as a stream type for identifying a compression codec of a stream, a stream PID, and stream attribute information (such as a frame rate or an aspect ratio). The stream descriptors are equal in number to the number of streams in the multiplexed data.

When the multiplexed data is recorded on a recording medium and others, it is recorded together with multiplexed data information files.

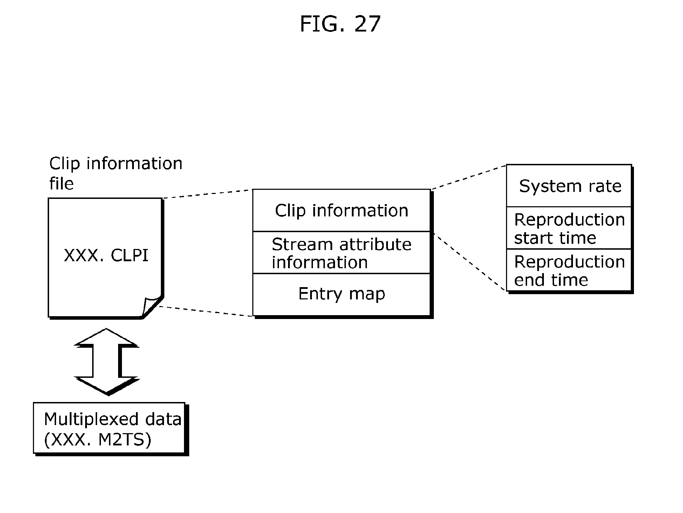

Each of the multiplexed data information files is management information of the multiplexed data as shown in FIG. 27. The multiplexed data information files are in one to one correspondence with the multiplexed data, and each of the files includes multiplexed data information, stream attribute information, and an entry map.

As illustrated in FIG. 27, the multiplexed data information includes a system rate, a reproduction start time, and a reproduction end time. The system rate indicates the maximum transfer rate at which a system target decoder to be described later transfers the multiplexed data to a PID filter. The intervals of the ATSs included in the multiplexed data are set to not higher than a system rate. The reproduction start time indicates a PTS in a video frame at the head of the multiplexed data. An interval of one frame is added to a PTS in a video frame at the end of the multiplexed data, and the PTS is set to the reproduction end time.

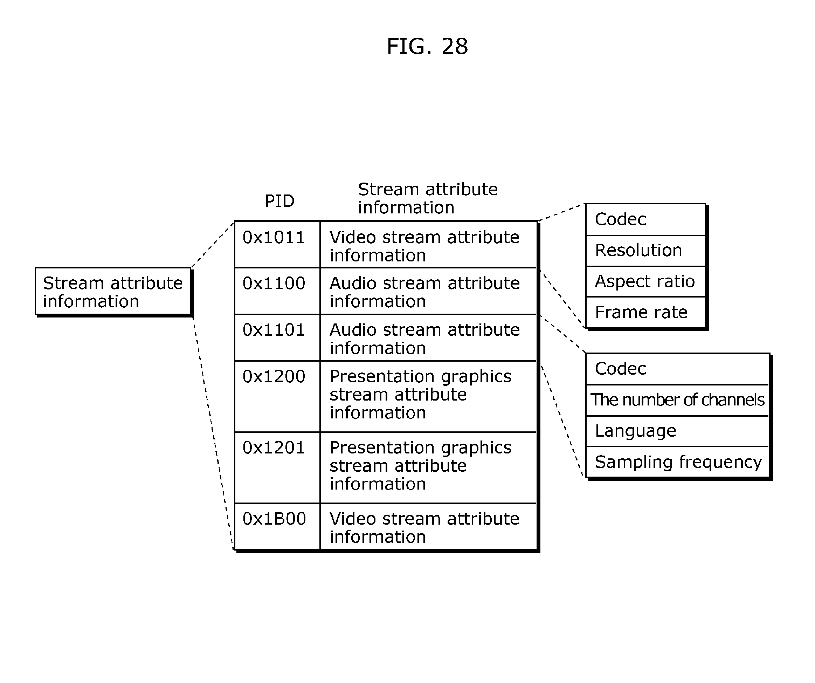

As shown in FIG. 28, a piece of attribute information is registered in the stream attribute information, for each PID of each stream included in the multiplexed data. Each piece of attribute information has different information depending on whether the corresponding stream is a video stream, an audio stream, a presentation graphics stream, or an interactive graphics stream. Each piece of video stream attribute information carries information including what kind of compression codec is used for compressing the video stream, and the resolution, aspect ratio and frame rate of the pieces of picture data that is included in the video stream. Each piece of audio stream attribute information carries information including what kind of compression codec is used for compressing the audio stream, how many channels are included in the audio stream, which language the audio stream supports, and how high the sampling frequency is. The video stream attribute information and the audio stream attribute information are used for initialization of a decoder before the player plays back the information.

In the present embodiment, the multiplexed data to be used is of a stream type included in the PMT. Furthermore, when the multiplexed data is recorded on a recording medium, the video stream attribute information included in the multiplexed data information is used. More specifically, the moving picture encoding method or the moving picture encoding apparatus described in each of embodiments includes a step or a unit for allocating unique information indicating video data generated by the moving picture encoding method or the moving picture encoding apparatus in each of embodiments, to the stream type included in the PMT or the video stream attribute information. With the configuration, the video data generated by the moving picture encoding method or the moving picture encoding apparatus described in each of embodiments can be distinguished from video data that conforms to another standard.

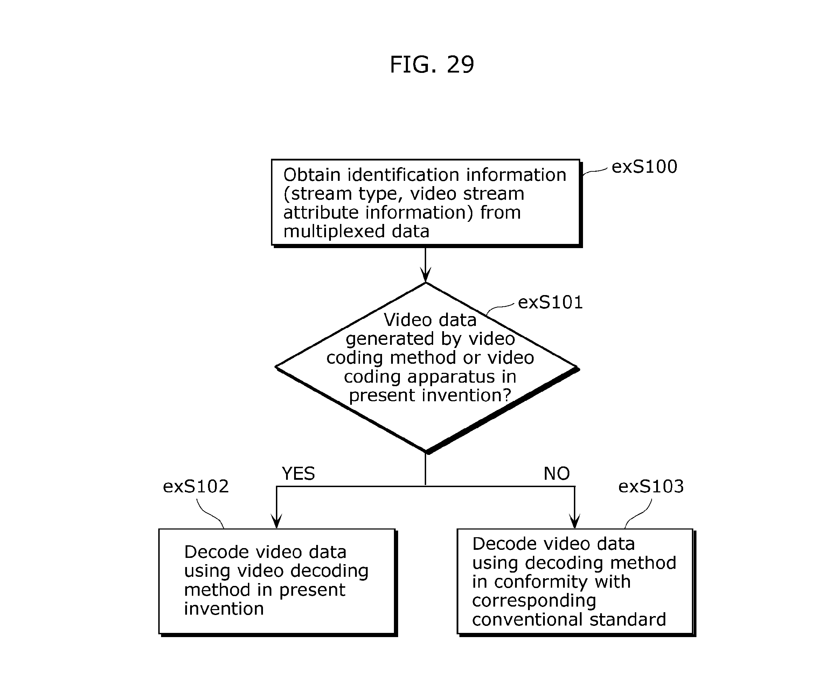

Furthermore, FIG. 29 illustrates steps of the moving picture decoding method according to the present embodiment. In Step exS100, the stream type included in the PMT or the video stream attribute information included in the multiplexed data information is obtained from the multiplexed data. Next, in Step exS101, it is determined whether or not the stream type or the video stream attribute information indicates that the multiplexed data is generated by the moving picture encoding method or the moving picture encoding apparatus in each of embodiments. When it is determined that the stream type or the video stream attribute information indicates that the multiplexed data is generated by the moving picture encoding method or the moving picture encoding apparatus in each of embodiments, in Step exS102, decoding is performed by the moving picture decoding method in each of embodiments. Furthermore, when the stream type or the video stream attribute information indicates conformance to the conventional standards, such as MPEG-2, MPEG-4 AVC, and VC-1, in Step exS103, decoding is performed by a moving picture decoding method in conformity with the conventional standards.

As such, allocating a new unique value to the stream type or the video stream attribute information enables determination whether or not the moving picture decoding method or the moving picture decoding apparatus that is described in each of embodiments can perform decoding. Even when multiplexed data that conforms to a different standard is input, an appropriate decoding method or apparatus can be selected. Thus, it becomes possible to decode information without any error. Furthermore, the moving picture encoding method or apparatus, or the moving picture decoding method or apparatus in the present embodiment can be used in the devices and systems described above.

### [Embodiment 4]

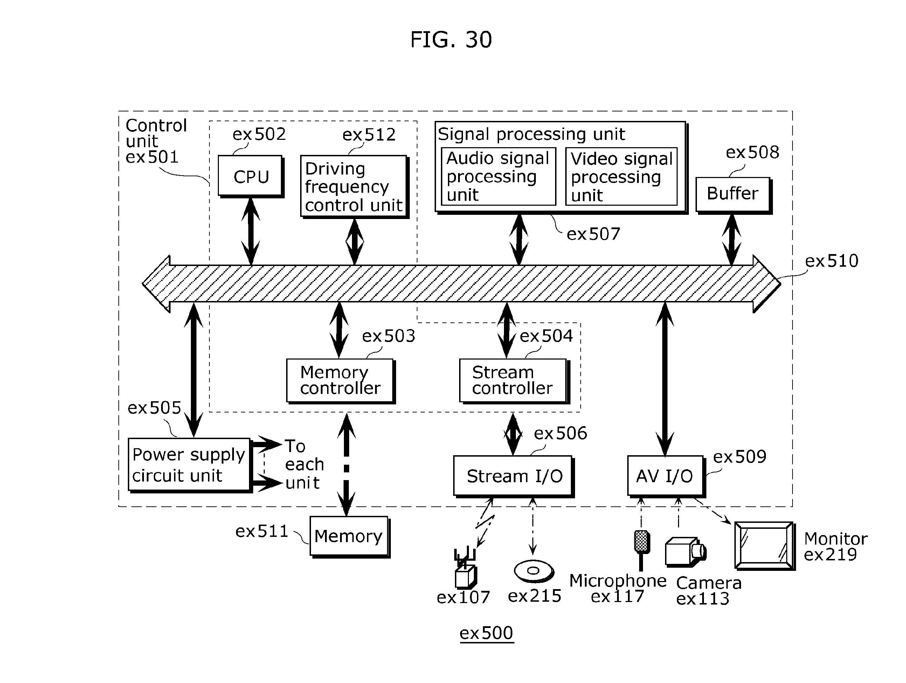

Each of the moving picture encoding method, the moving picture encoding apparatus, the moving picture decoding method, and the moving picture decoding apparatus in each of embodiments is typically achieved in the form of integrated circuitry or Large Scale Integrated (LSI) circuitry. As an example of the LSI, FIG. 30 illustrates a configuration of the LSI ex500 that is made into one chip. The LSI ex500 includes elements ex501, ex502, ex503, ex504, ex505, ex506, ex507, ex508, and ex509 to be described below, and the elements are connected to each other through a bus ex510. The power supply circuit unit ex505 is activated by supplying each of the elements with power when the power supply circuit unit ex505 is turned on.

For example, when encoding is performed, the LSI ex500 receives an AV signal from a microphone ex117, a camera ex113, and others through an AV IO ex509 under control of a control unit ex501 including a CPU ex502, a memory controller ex503, a stream controller ex504, and a driving frequency control unit ex512. The received AV signal is temporarily stored in an external memory ex511, such as an SDRAM. Under control of the control unit ex501, the stored data is segmented into data portions according to the processing amount and speed to be transmitted to a signal processing unit ex507. Then, the signal processing unit ex507 encodes an audio signal and/or a video signal. Here, the encoding of the video signal is the encoding described in each of embodiments. Furthermore, the signal processing unit ex507 sometimes multiplexes the encoded audio data and the encoded video data, and a stream IO ex506 provides the multiplexed data outside. The provided multiplexed data is transmitted to the base station ex107, or written on the recording medium ex215. When data sets are multiplexed, the data should be temporarily stored in the buffer ex508 so that the data sets are synchronized with each other.

Although the memory ex511 is an element outside the LSI ex500, it may be included in the LSI ex500. The buffer ex508 is not limited to one buffer, but may be composed of buffers. Furthermore, the LSI ex500 may be made into one chip or a plurality of chips.

Furthermore, although the control unit ex501 includes the CPU ex502, the memory controller ex503, the stream controller ex504, the driving frequency control unit ex512, the configuration of the control unit ex501 is not limited to such. For example, the signal processing unit ex507 may further include a CPU. Inclusion of another CPU in the signal processing unit ex507 can improve the processing speed. Furthermore, as another example, the CPU ex502 may serve as or be a part of the signal processing unit ex507, and, for example, may include an audio signal processing unit. In such a case, the control unit ex501 includes the signal processing unit ex507 or the CPU ex502 including a part of the signal processing unit ex507.

The name used here is LSI, but it may also be called IC, system LSI, super LSI, or ultra LSI depending on the degree of integration.

Moreover, ways to achieve integration are not limited to the LSI, and special circuitry or a general purpose processor and so forth can also achieve the integration. Field Programmable Gate Array (FPGA) that can be programmed after manufacturing LSIs or a reconfigurable processor that allows re-configuration of the connection or configuration of an LSI can be used for the same purpose. Such a programmable logic device can typically execute the moving picture encoding method and the moving picture decoding method described in each of embodiments, by loading, or reading from a memory, a program included in software or firmware.

In the future, with advancement in semiconductor technology, a brand-new technology may replace LSI. The functional blocks can be integrated using such a technology. The possibility is that the present invention is applied to biotechnology.

### [Embodiment 5]

When video data generated in the moving picture encoding method or by the moving picture encoding apparatus described in each of embodiments is decoded, compared to when video data that conforms to a conventional standard, such as MPEG-2, MPEG-4 AVC, and VC-1 is decoded, the processing amount probably increases. Thus, the LSI ex500 needs to be set to a driving frequency higher than that of the CPU ex502 to be used when video data in conformity with the conventional standard is decoded. However, there is a problem that the power consumption increases when the driving frequency is set higher.

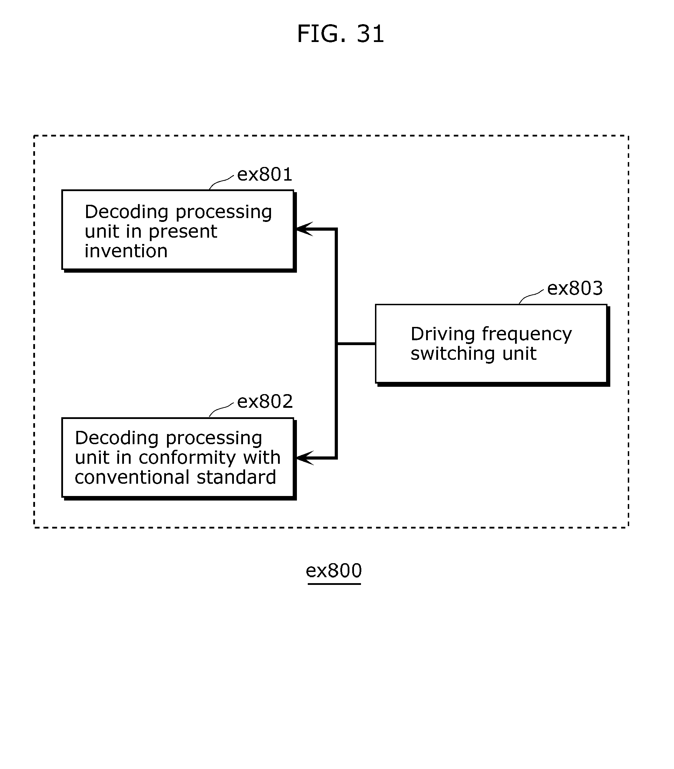

In order to solve the problem, the moving picture decoding apparatus, such as the television ex300 and the LSI ex500 is configured to determine to which standard the video data conforms, and switch between the driving frequencies according to the determined standard. FIG. 31 illustrates a configuration ex800 in the present embodiment. A driving frequency switching unit ex803 sets a driving frequency to a higher driving frequency when video data is generated by the moving picture encoding method or the moving picture encoding apparatus described in each of embodiments. Then, the driving frequency switching unit ex803 instructs a decoding processing unit ex801 that executes the moving picture decoding method described in each of embodiments to decode the video data. When the video data conforms to the conventional standard, the driving frequency switching unit ex803 sets a driving frequency to a lower driving frequency than that of the video data generated by the moving picture encoding method or the moving picture encoding apparatus described in each of embodiments. Then, the driving frequency switching unit ex803 instructs the decoding processing unit ex802 that conforms to the conventional standard to decode the video data.

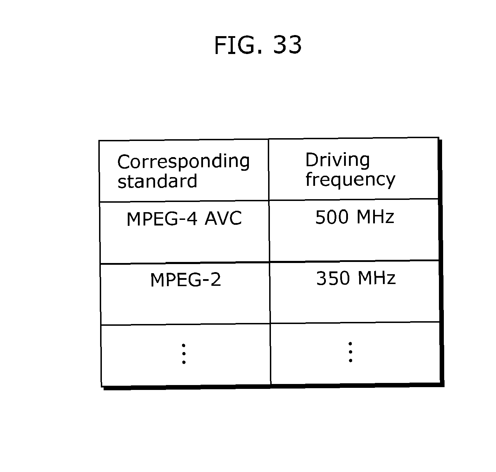

More specifically, the driving frequency switching unit ex803 includes the CPU ex502 and the driving frequency control unit ex512 in FIG. 30. Here, each of the decoding processing unit ex801 that executes the moving picture decoding method described in each of embodiments and the decoding processing unit ex802 that conforms to the conventional standard corresponds to the signal processing unit ex507 in FIG. 30. The CPU ex502 determines to which standard the video data conforms. Then, the driving frequency control unit ex512 determines a driving frequency based on a signal from the CPU ex502. Furthermore, the signal processing unit ex507 decodes the video data based on the signal from the CPU ex502. For example, the identification information described in Embodiment 3 is probably used for identifying the video data. The identification information is not limited to the one described in Embodiment 3 but may be any information as long as the information indicates to which standard the video data conforms. For example, when which standard video data conforms to can be determined based on an external signal for determining that the video data is used for a television or a disk, etc., the determination may be made based on such an external signal. Furthermore, the CPU ex502 selects a driving frequency based on, for example, a look-up table in which the standards of the video data are associated with the driving frequencies as shown in FIG. 33. The driving frequency can be selected by storing the look-up table in the buffer ex508 and in an internal memory of an LSI, and with reference to the look-up table by the CPU ex502.

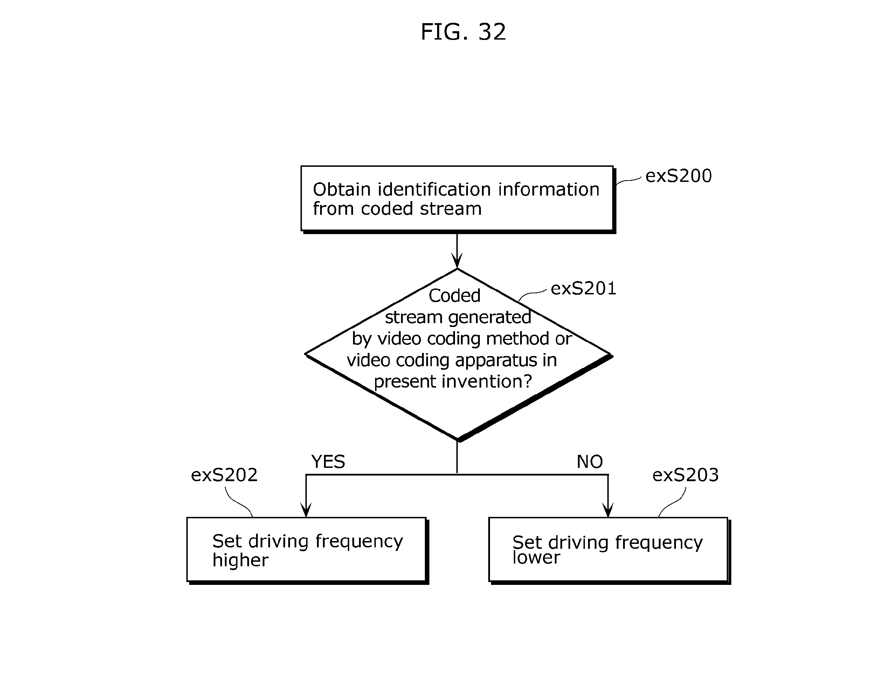

FIG. 32 illustrates steps for executing a method in the present embodiment. First, in Step exS200, the signal processing unit ex507 obtains identification information from the multiplexed data. Next, in Step exS201, the CPU ex502 determines whether or not the video data is generated by the encoding method and the encoding apparatus described in each of embodiments, based on the identification information. When the video data is generated by the moving picture encoding method and the moving picture encoding apparatus described in each of embodiments, in Step exS202, the CPU ex502 transmits a signal for setting the driving frequency to a higher driving frequency to the driving frequency control unit ex512. Then, the driving frequency control unit ex512 sets the driving frequency to the higher driving frequency. On the other hand, when the identification information indicates that the video data conforms to the conventional standard, such as MPEG-2, MPEG-4 AVC, and VC-1, in Step exS203, the CPU ex502 transmits a signal for setting the driving frequency to a lower driving frequency to the driving frequency control unit ex512. Then, the driving frequency control unit ex512 sets the driving frequency to the lower driving frequency than that in the case where the video data is generated by the moving picture encoding method and the moving picture encoding apparatus described in each of embodiment.

Furthermore, along with the switching of the driving frequencies, the power conservation effect can be improved by changing the voltage to be applied to the LSI ex500 or an apparatus including the LSI ex500. For example, when the driving frequency is set lower, the voltage to be applied to the LSI ex500 or the apparatus including the LSI ex500 is probably set to a voltage lower than that in the case where the driving frequency is set higher.

Furthermore, when the processing amount for decoding is larger, the driving frequency may be set higher, and when the processing amount for decoding is smaller, the driving frequency may be set lower as the method for setting the driving frequency. Thus, the setting method is not limited to the ones described above. For example, when the processing amount for decoding video data in conformity with MPEG-4 AVC is larger than the processing amount for decoding video data generated by the moving picture encoding method and the moving picture encoding apparatus described in each of embodiments, the driving frequency is probably set in reverse order to the setting described above.

Furthermore, the method for setting the driving frequency is not limited to the method for setting the driving frequency lower. For example, when the identification information indicates that the video data is generated by the moving picture encoding method and the moving picture encoding apparatus described in each of embodiments, the voltage to be applied to the LSI ex500 or the apparatus including the LSI ex500 is probably set higher. When the identification information indicates that the video data conforms to the conventional standard, such as MPEG-2, MPEG-4 AVC, and VC-1, the voltage to be applied to the LSI ex500 or the apparatus including the LSI ex500 is probably set lower. As another example, when the identification information indicates that the video data is generated by the moving picture encoding method and the moving picture encoding apparatus described in each of embodiments, the driving of the CPU ex502 does not probably have to be suspended. When the identification information indicates that the video data conforms to the conventional standard, such as MPEG-2, MPEG-4 AVC, and VC-1, the driving of the CPU ex502 is probably suspended at a given time because the CPU ex502 has extra processing capacity. Even when the identification information indicates that the video data is generated by the moving picture encoding method and the moving picture encoding apparatus described in each of embodiments, in the case where the CPU ex502 has extra processing capacity, the driving of the CPU ex502 is probably suspended at a given time. In such a case, the suspending time is probably set shorter than that in the case where when the identification information indicates that the video data conforms to the conventional standard, such as MPEG-2, MPEG-4 AVC, and VC-1.

Accordingly, the power conservation effect can be improved by switching between the driving frequencies in accordance with the standard to which the video data conforms. Furthermore, when the LSI ex500 or the apparatus including the LSI ex500 is driven using a battery, the battery life can be extended with the power conservation effect.

### [Embodiment 6]

There are cases where a plurality of video data that conforms to different standards, is provided to the devices and systems, such as a television and a cellular phone. In order to enable decoding the plurality of video data that conforms to the different standards, the signal processing unit ex507 of the LSI ex500 needs to conform to the different standards. However, the problems of increase in the scale of the circuitry of the LSI ex500 and increase in the cost arise with the individual use of the signal processing units ex507 that conform to the respective standards.

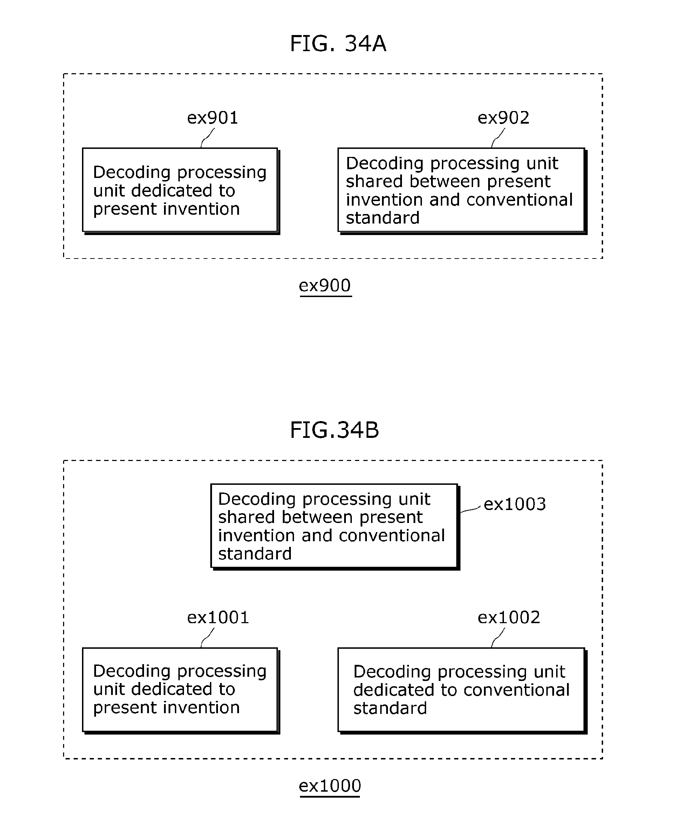

In order to solve the problem, what is conceived is a configuration in which the decoding processing unit for implementing the moving picture decoding method described in each of embodiments and the decoding processing unit that conforms to the conventional standard, such as MPEG-2, MPEG-4 AVC, and VC-1 are partly shared. Ex900 in FIG. 34A shows an example of the configuration. For example, the moving picture decoding method described in each of embodiments and the moving picture decoding method that conforms to MPEG-4 AVC have, partly in common, the details of processing, such as entropy encoding, inverse quantization, deblocking filtering, and motion compensated prediction. The details of processing to be shared probably include use of a decoding processing unit ex902 that conforms to MPEG-4 AVC. In contrast, a dedicated decoding processing unit ex901 is probably used for other processing which is unique to an aspect of the present invention and does not conform to MPEG-4 AVC. Since the aspect of the present invention is characterized by entropy decoding in particular, for example, the dedicated decoding processing unit ex901 is used for the entropy decoding. Otherwise, the decoding processing unit is probably shared for one of the inverse quantization, deblocking filtering, and motion compensation, or all of the processing. The decoding processing unit for implementing the moving picture decoding method described in each of the embodiments may be shared for the processing to be shared, and a dedicated decoding processing unit may be used for processing unique to that of MPEG-4 AVC.

Furthermore, ex1000 in FIG. 34B shows another example in that processing is partly shared. This example uses a configuration including a dedicated decoding processing unit ex1001 that supports the processing unique to an aspect of the present invention, a dedicated decoding processing unit ex1002 that supports the processing unique to another conventional standard, and a decoding processing unit ex1003 that supports processing to be shared between the moving picture decoding method according to the aspect of the present invention and the conventional moving picture decoding method. Here, the dedicated decoding processing units ex1001 and ex1002 are not necessarily specialized for the processing according to the aspect of the present invention and the processing of the conventional standard, respectively, and may be the ones capable of implementing general processing. Furthermore, the configuration of the present embodiment can be implemented by the LSI ex500.

As such, reducing the scale of the circuitry of an LSI and reducing the cost are possible by sharing the decoding processing unit for the processing to be shared between the moving picture decoding method according to the aspect of the present invention and the moving picture decoding method in conformity with the conventional standard.

### [Industrial Applicability]

The present invention can be applied to an image encoding method and an image decoding method, and an image encoding apparatus and an image decoding apparatus. Furthermore, the present invention can be applied for various purposes such as accumulation, transmission, and communication of data. For example, the present invention can be used for information display devices and capturing devices, such as televisions, digital video recorders, car navigation systems, mobile phones, digital still cameras, and digital video cameras.

### [Reference Signs List]

101 Tile information
102 Tile structure fixed flag
103 Substream flag
104 Partition information
105, 111 Number of columns
106, 112 Number of rows
110 Tile structure information
113 Uniform-spacing flag
114 Column width
115 Row height
116 Loop filter enabled flag
120 Parallel processing entry point information
121 Parallel processing entry point flag
122 Substream identifier
200 Image encoding apparatus
205 Subtractor
210 Transform-and-quantization unit
220 Entropy encoder
230, 420 Inverse-quantization and inverse-transform unit
235, 425 Adder
240, 430 Deblocking filter
250, 440 Memory
260, 450 Intra prediction unit
270 Motion estimation unit
280, 460 Motion compensation unit
290, 470 Intra/inter switch
400 Image decoding apparatus
410 Entropy decoder

## Claims

1. An image encoding method comprising:
partitioning each of a plurality of pictures into a plurality of tiles;
generating a tile structure fixed flag indicating whether or not a partition pattern for the plurality of tiles is same among the plurality of pictures;
encoding the plurality of tiles to generate a plurality of encoded signals; and
generating an encoded bitstream including the plurality of encoded signals and the tile structure fixed flag.

2. The image encoding method according to Claim 1, further comprising
generating tile structure information indicating the partition pattern for the plurality of tiles,
wherein, in the generating of an encoded bitstream, the encoded bitstream is generated including the tile structure information.

3. The image encoding method according to Claim 2,
wherein the tile structure information indicates the number of rows and the number of columns of the plurality of tiles included in each of the plurality of pictures.

4. The image encoding method according to one of Claim 2 and Claim 3,
wherein the tile structure information includes a uniform-spacing flag indicating whether or not partition boundaries of the plurality of tiles are uniformly spaced.

5. The image encoding method according to any one of Claim 1 to Claim 4, further comprising
generating parallel processing entry point information indicating one of the tiles that is an entry point for parallel decoding processing by an image decoding apparatus,
wherein, in the generating of an encoded bitstream, the encoded bitstream is generated including the parallel processing entry point information.

6. The image encoding method according to Claim 5, further comprising
generating tile position information indicating positions of the plurality of tiles,
wherein, in the generating of an encoded bitstream, the encoded bitstream is generated including the tile position information, and
the parallel processing entry point information is different from the tile position information.

7. The image encoding method according to Claim 6,
wherein, in the encoded bitstream, the parallel processing entry point information is located behind the tile position information.

8. The image encoding method according to any one of Claim 5 to Claim 7,
wherein the parallel processing entry point information includes:
a flag indicating whether or not a current tile to be processed is an entry point for parallel processing; and
an identification number of a parallel processing unit which begins at the current tile.

9. An image decoding method comprising:
obtaining a tile structure fixed flag included in an encoded bitstream and indicating whether or not a partition pattern for the plurality of tiles is same among the plurality of pictures;
identifying a tile structure based on the tile structure fixed flag; and
generating a plurality of decoded signals by performing decoding on a plurality of encoded signals included in the encoded bitstream and corresponding to each of the plurality of tiles, according to the identified tile structure.

10. The image decoding method according to Claim 9, further comprising
obtaining, from the encoded bitstream, tile structure information indicating the partition pattern for the plurality of tiles,
wherein, in the identifying of a tile structure, the tile structure is identified based on the tile structure information.

11. The image decoding method according to Claim 10,
wherein the tile structure information indicates the number of rows and the number of columns of the plurality of tiles included in each of the plurality of pictures.

12. The image decoding method according to one of Claim 10 and Claim 11,
wherein the tile structure information includes an uniform-spacing flag indicating whether or not partition boundaries of the plurality of tiles are uniformly spaced.

13. The image decoding method according to any one of Claim 9 to Claim 12, further comprising
obtaining, from the encoded bitstream, parallel processing entry point information indicating one of the plurality of tiles that is an entry point for parallel processing,
wherein, in the generating of a plurality of decoded signals, the parallel decoding processing is performed based on the parallel processing entry point information.

14. The image decoding method according to Claim 13, further comprising
obtaining, from the encoded bitstream, tile position information indicating positions of the plurality of tiles,
wherein, in the generating of a plurality of decoded signals, the plurality of encoded signals are decoded based on the tile position information, and
the parallel processing entry point information is different from the tile point information.

15. The image decoding method according to Claim 14,
wherein, in the obtaining of parallel processing entry point information, the parallel processing entry point information located behind the tile position information in the encoded bitstream is obtained.

16. The image decoding method according to any one of Claim 13 to Claim 15,
wherein the parallel processing entry point information includes:
a flag indicating whether or not a current tile to be processed is an entry point for parallel processing; and
an identification number of a parallel processing unit which begins at the current tile.

17. An image encoding apparatus comprising:
control circuitry; and
storage electrically connected to the control circuitry,
wherein the control circuitry executes:
partitioning each of a plurality of pictures into a plurality of tiles;
generating a tile structure fixed flag indicating whether or not a partition pattern for the plurality of tiles is same among the plurality of pictures;
encoding the plurality of tiles to generate a plurality of encoded signals; and
generating an encoded bitstream including the plurality of encoded signals and the tile structure fixed flag.

18. An image decoding apparatus comprising:
control circuitry; and
storage electrically connected to the control circuitry;
wherein the control circuitry executes:
obtaining a tile structure fixed flag included in an encoded bitstream and indicating whether or not a partition pattern for the plurality of tiles is same among a plurality of pictures;
identifying a tile structure based on the tile structure fixed flag; and
generating a plurality of decoded signals by performing decoding on a plurality of encoded signals included in the encoded bitstream and corresponding to each of a plurality of tiles, according to the identified tile structure.

19. An image encoding and decoding apparatus comprising:
the image encoding apparatus according to Claim 17; and
the image decoding apparatus according to Claim 18.
